# EUROPEAN PATENT SPECIFICATION

(11) **EP 3 662 426 B1**
(45) Date of publication and mention of the grant of the patent: **18.06.2025**
(21) Application number: 18841939.4
(22) Date of filing: 03.08.2018
(51) Int. Cl.: G06Q 10/0833, G06Q 10/083, G06Q 10/08, G06Q 30/06, G08B 1/08, G08B 29/02

(54) **TRACKING SYSTEM AND METHOD FOR MONITORING AND ENSURING SECURITY OF SHIPMENTS**
VERFOLGUNGSSYSTEM UND -VERFAHREN ZUR ÜBERWACHUNG UND SICHERSTELLUNG DER SICHERHEIT VON SENDUNGEN
SYSTÈME ET PROCÉDÉ DE SUIVI POUR LA SURVEILLANCE ET L'ASSURANCE DE LA SÉCURITÉ D'EXPÉDITIONS

(30) Priority: 03.08.2017 US 201762540659 P
(43) Date of publication of application: 10.06.2020
(73) Proprietor: Overhaul Group, Inc., Austin TX 78759 (US); Conlon, Barry, Leander, Texas 78641 (US)
(72) Inventor: CONLON, Barry, Leander Texas 78641 (US)
(74) Representative: Pure Ideas Limited
(86) International application number: PCT/US2018/045288
(87) International publication number: WO 2019/028443

(56) References cited:
- US-A1- 2008 294 491
- US-A1- 2014 236 856
- US-A1- 2015 161 697
- US-A1- 2015 339 902
- US-A1- 2015 371 185
- US-A1- 2016 335 593
- US-A1- 2017 053 234

## Description

### PRIORITY & RELATED APPLICATIONS

The application claims priority to United States Provisional Application No. 62/540659, filed on August 3, 2017.

### BACKGROUND

### 1. Field of the Invention

The present disclosure is generally related to security systems and processes in the cargo transportation industry, and in particular to a method and system for monitoring the status and providing security of shipments via location-based tracking.

### 2. Description of the Related Art

Large quantities of cargo are transported daily across the continental US and in most other industrial countries, with transportation carriers. The use of tractor-trailers provided by the trucking industry accounts for a significant portion of the carriers utilized to transport these cargo, including those cargo that may eventually be transferred from the tractor-trailer and placed on an air transport of shipping vessel, or vice-versa. In the trucking industry, cargo are arranged to be transported from an origination point to a destination point via a particular tractor-trailer driven by an operator. The truckers (or truck drivers/operators) who provide the actual service of moving these cargo from origination to destination are often owner-operated truckers, whose sole purpose is to securely transmit the cargo from origination point to destination point and be paid for completion of that delivery.

Each shipped cargo is valuable to the parties involved in the shipment transaction, from the shipper, the brokerage service, the trucker (or truck driver/operator), and the recipient. Thus, the security of the cargo once the cargo leaves the origination/shipping point is of concern. With conventional trucking, the security aspects of the cargo have been primarily based on the operator being diligent in the field as the tractor-trailer is moved along a selected delivery route.

Unfortunately, the value of these cargo is often also of value to others not involved in the shipment, and who may desire to steal the cargo and/or the truck for various reasons, including financial or otherwise. Even a diligent operator is not be able to detect when activities are occurring in or around the shipment and the tractor-trailer or truck that negatively affects the shipment and/or jeopardizes or prevents the completion of the shipment delivery.

US 2017/053234 A1 discloses a graphical user interface for real-time tracking of shipping transactions, allowing for a comprehensive view of the movement of multiple assets during any specified time period. Each asset is assigned a unique ID. Group-wise tracking information is also displayed. A separate status tracking service is running all the time to assess an assets' geofencing activities to move forward an order status and to check alarm trigger conditions to send out notifications to pre-configured audiences.

### BRIEF DESCRIPTION OF THE FIGURES

The description of the illustrative embodiments can be read in conjunction with the accompanying figures. It will be appreciated that for simplicity and clarity of illustration, elements illustrated in the figures have not necessarily been drawn to scale. For example, the dimensions of some of the elements are exaggerated relative to other elements. Embodiments incorporating teachings of the present disclosure are shown and described with respect to the figures presented herein, in which:
**FIG. 1A** illustrates an example data processing system (DPS) within which various aspects of a shipment location tracking and security system can be implemented, in accordance with one or more embodiments;
**FIG. 1B** provides a block diagram representation of example functional modules that support the various different features provided by a shipment location tracking and security utility (SLTSU) within the DPS of **FIG. 1A****,** in accordance with one or more embodiments;
**FIG. 2** illustrates an example shipment tracking communication environment that includes shipment-related entities configured with location tracking devices that communicate location signals to a monitoring computer via a communication network, according to one or more embodiments;
**FIG. 3A** illustrates an example flow of input data from a variety of different shipment-related entities and environmental sources that are received, compiled and/or aggregated to present specific workflow instructions to a mobile communication device of a driver/operator transporting the shipment, according to one or more embodiments;
**FIG. 3B** illustrates an example signal jamming attack within the communication environment of **FIG. 3A** and the responsive identification of the attack and notification of relevant stakeholders triggered by execution of the SLTSU by aggregation server, in accordance with one embodiment;
**FIG. 4A** is a block diagram representation content presented within an example shipment tracking user interface (STUI) providing the tracking of shipment groups using co-located visual affordances, according, according to a plurality of embodiments;
**FIG. 4B** illustrates a second STUI, which presents a focused view of a selected, single shipment group, according to one or more embodiments;
**FIGs. 5A-5D** and **6A-6D** respectively illustrates example dots tracking user interfaces that present a focused view of co-located shipment-related entities of a particular shipment being monitored, including warnings/notifications identifying any anomalies occurring with the shipment, according to one or more embodiments;
**FIG. 7** provides a flow chart illustrating a method for monitoring shipments using co-located dots and responding to detected anomalies or deviations in the expected movement and/or presentation of the dots, in accordance with a plurality of embodiments;
**FIG. 8A** provides a flow chart illustrating a method for identifying a type of anomaly and responding to separation of co-located dots outside of expected separation zones, in accordance with one or more embodiments;
**FIG. 8B** provides a flow chart illustrating a method for identifying when a shipment is moved by someone other than an authorized and assigned driver/operator, in accordance with one or more embodiments;
**FIG. 9** provides a flow chart illustrating a method for identifying and responding to jamming attacks and a loss of location signals, in accordance with one or more embodiments; and
**FIG. 10** illustrates an example mobile communication device utilized by an operator/driver and which is equipped with a DOTS tracking app to enable real-time tracking of the shipment group and receipt of notification of potential problems occurring with the shipment group, in accordance with one or more embodiments.

### DESCRIPTION OF ILLUSTRATIVE EMBODIMENTS

The present invention is defined in the independent claims. Preferred embodiments are defined in the dependent claims.

According to one or more aspects, the illustrative embodiments of the present disclosure provide a data processing system, a shipment security monitoring and tracking system, a method, and a mobile communication device for electronically tracking a shipment to provide enhanced security and safety of the shipment and counter against theft and other illicit actions, including jamming attacks. A system electronically tracks each or multiple shipment-related entities as a group of co-located dots that are monitored to provide enhanced security of the shipment from attacks or unauthorized or illicit actions that can compromise the shipment's safety. A data processing system (DPS) receives a plurality of location tracking signals of multiple shipment-related entities, associates the location tracking signals as a shipment group that is assigned a unique shipment tracking identifier (STID), and presents the shipment group as a plurality of co-located dots on a shipment tracking user interface (STUI). The DPS monitors for any unscheduled deviations in at least one of an expected co-location/geo-location of the location tracking signals, identifies specific types of unscheduled deviations, and triggers a series of responsive actions to protect the shipment. The unscheduled deviations can include signal jamming attacks, incorrect pickup (or theft) of an operator-assigned shipment, and unexpected separation of the tracked entities.

Generally, the illustrative embodiments further provide for different forms and methods of dot-based, automated tracking of shipments, with computer-based detection of abnormalities in the movement of the co-located dots and subsequent response to the detected abnormalities by automatic computer-based generation of one or more notifications and/or triggering of responsive actions. As a first aspect, one implementation of the disclosure generally provides security tracking of a shipment by presenting and monitoring the movement of multiple co-located dots, with each dot representing one of multiple shipment-related entities. The movement of the co-located dots are then analyzed to enable detection of potential bad act towards the shipping vehicle/vessel and/or the shipment or cargo, such as abandonment of a shipment by the operator/driver, as one application. Other applications of the disclosure provide embodiments for generation of real-time alerts and/or notification of potential theft of cargo and/or a transportation vehicle, such as a tractor-trailer, where the theft is being facilitated by signal jamming attacks or location sensor tampering.

The disclosure expands on the use of systems for tracking a location of one or more shipment-related entities involved in the shipment of a cargo. For example, to track the location of a cargo and/or a tractor-trailer, a location tracking device (such as a transponder) can be attached to the entity being tracked, in one embodiment. The location tracking device wirelessly communicates a location signal indicating a geographic location of the tracked entity. The location of a single entity associated with the shipment can then be tracked via a single dot on a tracking/monitoring computer that receives the geographic signals from the location tracking device.

In conventional shipments that include a single transponder to track the location of a shipment and/or the tractor-trailer, thieves and others who intend to take or otherwise interfere with the cargo/shipment or the tractor-trailer have resorted to utilizing jamming techniques to block the outbound signals of the transponders. Once the signals are blocked, the thief can then proceed to remove the cargo from the tractor-trailer or steal the tractor and/or trailer or the combination thereof with the cargo, knowing that the location of the shipment can no longer be traced. By using this jamming attack on the transponder signal, no wireless trace is transmitted for the monitoring computer to later detect the location of the stolen items, when the theft is later discovered. By the time the theft is discovered, the thief is likely long gone with the shipment. The present disclosure addresses this use of signal jamming by providing a monitoring system that quickly identifies when the signal jamming attack has been initiated and a responsive system to notify the relevant parties to respond to and prevent the theft of the cargo or container.

Additionally, a cargo or a trailer containing cargo is occasionally assigned by a shipper for pick up by a selected/authorized driver/operator from a pick-up point, such as a cargo on-loading dock. There are occasions when the cargo or trailer is deliberately or inadvertently hitched to the vehicle (e.g., a truck) of another operator and taken away from the pick-up point by the incorrect/unauthorized operator. When the correct/authorized operator arrives, there is no cargo/trailer to pick up, and the un-authorized operator may be long gone with the shipment. The shipper and other associated/interested parties are forced to deal with a loss of the shipment, with a resulting loss in time and/or financial loss, particularly if the cargo or trailer was deliberately taken by the unauthorized operator and is not recovered. Again, aspects of the disclosure address each of the above scenarios and provides a solution that enables early detection of these activities and triggered notifications and responses that mitigate the effects of the specific activity detected.

In the following detailed description of exemplary embodiments of the disclosure, specific exemplary embodiments in which the disclosure may be practiced are described in sufficient detail to enable those skilled in the art to practice the disclosed embodiments. For example, specific details such as specific method orders, structures, elements, and connections have been presented herein. However, it is to be understood that the specific details presented need not be utilized to practice embodiments of the present disclosure. It is also to be understood that other embodiments may be utilized and that logical, architectural, programmatic, mechanical, electrical and other changes may be made without departing from general scope of the disclosure. The following detailed description is, therefore, not to be taken in a limiting sense, and the scope of the present disclosure is defined by the appended claims.

References within the specification to "one embodiment," "an embodiment," "embodiments", or "one or more embodiments" are intended to indicate that a particular feature, structure, or characteristic described in connection with the embodiment is included in at least one embodiment of the present disclosure. The appearance of such phrases in various places within the specification are not necessarily all referring to the same embodiment, nor are separate or alternative embodiments mutually exclusive of other embodiments. Further, various features are described which may be exhibited by some embodiments and not by others. Similarly, various requirements are described which may be requirements for some embodiments but not other embodiments.

It is understood that the use of specific component, device and/or parameter names and/or corresponding acronyms thereof, such as those of the executing utility, logic, and/or firmware described herein, are for example only and not meant to imply any limitations on the described embodiments. The embodiments may thus be described with different nomenclature and/or terminology utilized to describe the components, devices, parameters, methods and/or functions herein, without limitation. References to any specific protocol or proprietary name in describing one or more elements, features or concepts of the embodiments are provided solely as examples of one implementation, and such references do not limit the extension of the claimed embodiments to embodiments in which different element, feature, protocol, or concept names are utilized. Thus, each term utilized herein is to be given its broadest interpretation given the context in which that term is utilized.

Within the description of the features of the disclosure and the accompanying drawings, the embodiments are presented from the perspective of a trucking based shipping model, where the term "carriers" is provided to refer to (i) an owner-operator with a single equipment, (ii) an owner-operator or small business owner with several trucks, and who can employ multiple drivers, and (iii) a large commercial organization/company that includes a large number of trucks, e.g., hundreds of trucks and drivers. Additionally, the term "equipment" generally refers to the combination of "tractor and trailer", and covers the various different types of equipment available, including, but not limited to, flatbeds, dry vans, refrigerated trucks, etc. According to one embodiment, the relevant details of the equipment that is tracked includes the type of equipment as well as the available capacity of the specific equipment to load additional cargo. It is appreciated that, while specific types of cargo hauling trucks fall within the term equipment, the term equipment can also apply to different types of trucks or motor vehicles, without limitation. Additionally, the underlying features of the disclosure are fully applicable to other transportation and/shipping spaces, such as water-based shipping (e.g., ocean cargo or river cargo), where carriers are boat owners carriers or cargo ship captains, the equipment are the water vessels or amphibious vessels, and the shipper can be any registered person or business that has a cargo that can be transported over water from a cargo pick-up point to a delivery destination by a carrier. Air based transportation is also a supported space that can include a framework designed for interfacing by air-based cargo shippers and pilots with planes, etc. It is further foreseeable that the functionality of the presented framework/environment can be extended to a transportation space involving drone shipments, for example, where the drone operators (pilots) are not co-located with the drone equipment.

For simplicity and to present best mode embodiments, the disclosure is described from the perspective of a shipment that is being transported by a tractor-trailer combination as common in the trucking industry, where the carrier is a trucker and the equipment is a truck or tractor (an on-land motor vehicles) to which a trailer or container is hitched. It is understood that the features and functionality described herein can also be applicable to different types of on-land motorized equipment, such as cars, RVs, busses, motorcycles, and the like, without limitation. Extension to bicycles and other non-motorized form of transportation can also be applicable.

Certain coined terms are utilized herein in describing the features and functionality of the disclosure. For example, the term "shipment-related entity" is utilized to reference each of the following, without limitation: a cargo, a cargo container, a tractor (e.g., a motorized vehicle), a trailer or container, a tractor-trailer as a combined operator equipment, an operator, an operator mobile device. Each shipment-related entity has a separate location tracking mechanism that enables the geographic location of the entity to be determined. In one or more embodiments, the location tracking mechanism is a transponder. The location tracking mechanism provides a unique location signal for the particular shipment-related entity. The term "shipment group" generally represents any two or more of the shipment-related entities that are assigned to a same shipment. Entities in a shipment group are expected to be physically co-located while the shipment is being delivered. Certain limited exceptions or deviations to the co-location of one or more of the entities is anticipated and accounted for by the algorithm provided herein. The grouping of entities is expected to be within a specific range/radius of each other and to move in the same direction as each other, with some limited exceptions (e.g., when a truck driver/operator leaves the truck/tractor-trailer at a truck stop or at a shipment pickup or drop-off location).

Throughout the description, references made to the term shipment refers primarily to the cargo that is being carrier from an origination point to a delivery destination. Other terms utilized throughout the disclosure are provided with functional descriptive names that represent the meanings and/or the context in which the terms are presented and/or utilized.

The attached figures present various aspects and/or features of the described embodiments; however, certain features may not be expressly presented within the figures and/or the description thereof. Within the descriptions of the different views of the figures, similar elements are provided similar names and reference numerals as those of the previous figure(s). The description of the illustrative embodiments are therefore be read in conjunction with the accompanying figures. It will be appreciated that for simplicity and clarity of illustration, elements illustrated in the figures have not necessarily been drawn to scale. For example, the dimensions of some of the elements are exaggerated relative to other elements. Embodiments incorporating teachings of the present disclosure are shown and described with respect to the figures presented herein.

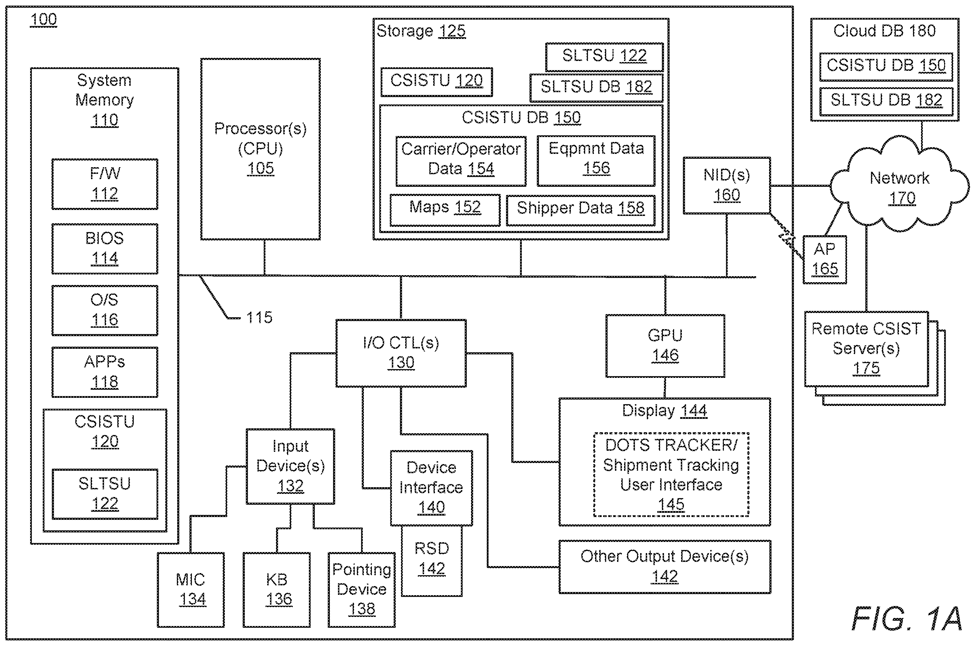

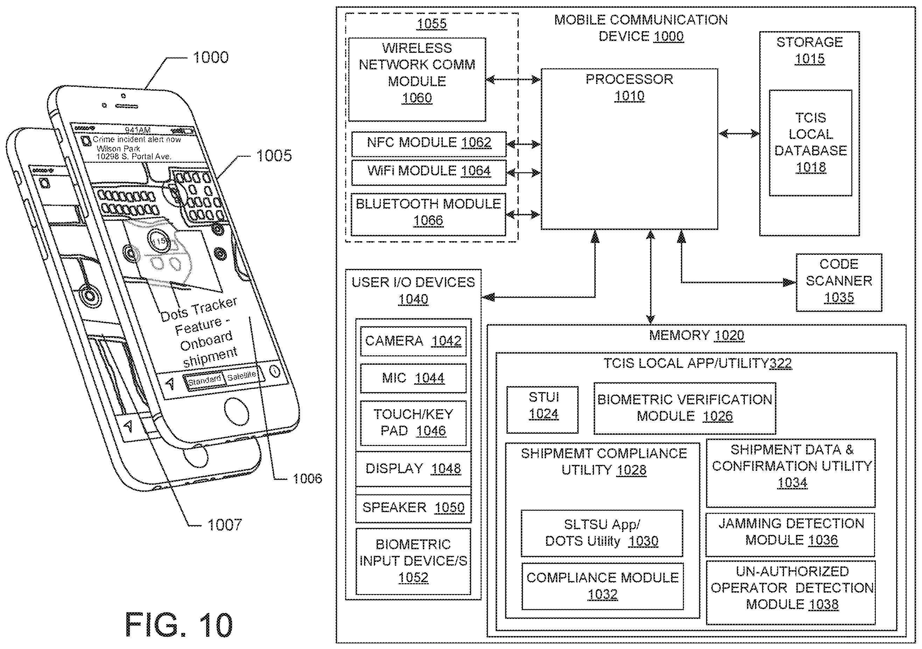

Those of ordinary skill in the art will appreciate that the hardware, firmware/software utility, and software components and basic configuration thereof depicted in the following figures may vary. For example, the illustrative components of data processing system **100 (****FIG. 1A****)** and mobile communication device **1000 (****FIG. 10****)** are not intended to be exhaustive, but rather are representative to highlight some of the components that are utilized to implement certain of the described embodiments. For example, different configurations of either computer device **100** or user mobile communication device **1000** may be provided, containing other devices/components, which may be used in addition to or in place of the hardware depicted and/or described, and may be differently configured. The depicted examples are therefore not meant to imply architectural or other limitations with respect to the presently described embodiments and/or the general innovation.

Referring now to the figures, and beginning with **FIG. 1A****,** there is illustrated an example server data processing system (DPS) **100** within which can be implemented various aspects of the disclosure and in particular cargo/shipment tracking, with detection and notification of potential abnormalities that can be indicative of bad act, in accordance with one or more embodiments. In one embodiment, DPS **100** can be one sever within a cluster of servers, where the servers can be co-located in a single location and/or geographically dispersed over a plurality of locations. In other embodiments, DPS **100** can be any electronic device such as, but not limited to, a desktop computer, notebook computer, or a single server. Additionally, in one embodiment, DPS **100** can be implemented as a virtual machine sharing hardware resources of a physical server. In one embodiment, DPS **100** operates as a networked computing device providing a cloud infrastructure that supports implementation of a carrier and shipper interfacing and shipment tracking (CSIST) framework. Generally, DPS **100** can operate as both a data aggregator and/or a monitoring center computer. As a data aggregator, DPS **100** receives additional amounts of information from shipment-related entities to enable other features and functionalities, included those described within the parent application. As a monitoring center computer, DPS **100** can be configured with additional methods and components for generating notifications and responding to detected conditions.

Example DPS **100** includes at least one processor, and potentially a plurality of processors, generally referenced hereinafter as central processing unit (CPU) **105.** CPU **105** is coupled to system memory **110,** non-volatile storage **125,** and input/output (I/O) controllers **130** via system interconnect **115.** System interconnect **115** can be interchangeably referred to as a system bus, in one or more embodiments. One or more software and/or firmware modules can be loaded into system memory **110** (from storage **125** or other source) during operation of DPS **100.** Specifically, in the illustrative embodiment, system memory **110** is shown having therein a plurality of software/firmware modules, including firmware (F/W) **112,** basic input/output system (BIOS) **114,** operating system (OS) **116,** and application(s) **118.** Additionally, system memory **110** includes CSIST utility (CSISTU) **120,** which includes shipment location tracking and security utility (SLTSU) **122.** While shown as a separate module, CSISTU **120** can, in alternate embodiments, be provided as one of applications **118** and/or as an executable component within F/W **112** or OS **116.** Additionally, while presented as a module within CSISTU **120,** SLTSU **122** can be a separate, stand-alone module, in alternate embodiments and can be executed independent of (i.e., without requiring the concurrent execution of) CSISTU **120.** The software and/or firmware modules within system memory **110** enable DPS **100** to provide varying features and functionality when their corresponding program code is executed by CPU **105** or by secondary processing devices (not specifically shown) within DPS **100.**

I/O controllers **130** support connection by and processing of signals from one or more connected input device(s) **132,** of which microphone **134,** keyboard **136,** and pointing/touch device **138** are illustrated, by way of example. Pointing/touch device **138** can be a mouse or a touch pad, or stylus, for example. It is appreciated that input devices can also include, as a non-exclusive list, hardware button(s), touch screen **146,** infrared (IR) sensor, a fingerprint scanner, and the like. I/O controllers **130** also support connection with and forwarding of output signals to one or more connected output devices, including display **144** and other output devices **148.** Display **144** can include a touch screen **146** that serves as a tactile input device. In one embodiment, DPS **100** also includes a graphics processing unit (GPU) **146,** which is communicatively (or physically) coupled to display **144** and to processor **105.** GPU **146** controls the generation and presentation of certain user interfaces (UIs) that are created during execution of CSISTU **120** and/or SLTSU **122** by CPU **105.** As a specific embodiment, and as described in greater detail below, SLTSU **122** generates shipment tracking user interface (STUI) **145,** which is presented on display **144** and on which a grouping of co-located signal dots are presented and monitored for detection of security breaches with the associated shipment. In one or more embodiments, STUI **145** can also be interchangeably referred to herein as a DOTS tracker UI, which describes the base functions provided by STUI **145** of co-locating and tracking the dots assigned to the shipment-related entities in a shipment group.

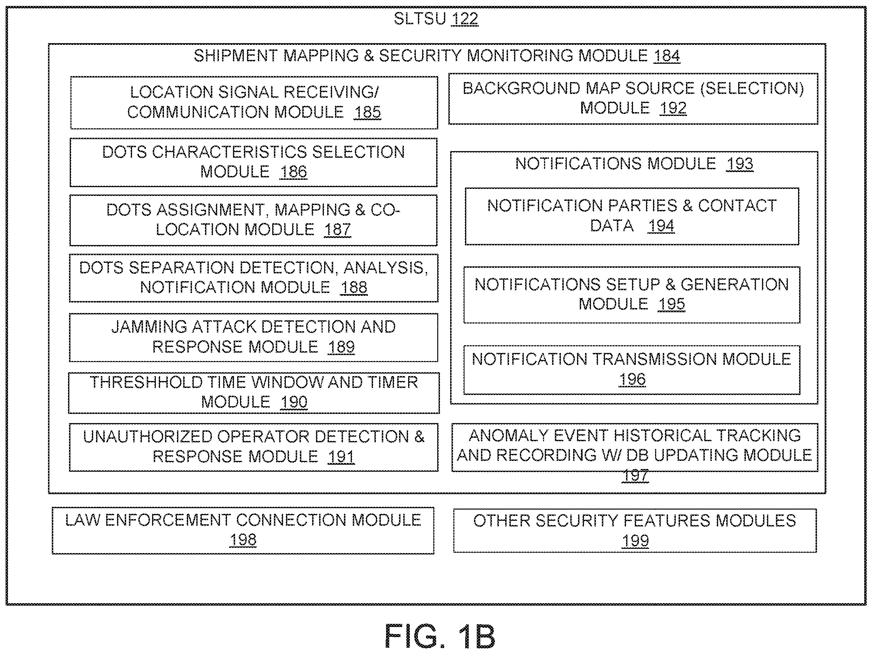

**FIG. 1B** provides a block diagram representation of some of the functional (software) modules that performs the various features and operations of SLTSU **122** when executed by processor **105.** Included within SLTSU **122** is a shipment mapping and security monitoring module **184,** which in turn includes, without limitation, locations signal receiving/communication module **185,** dots characteristics selection module **186,** dots assignment, mapping and co-location module **187,** dots separation detection, analysis, notification module **188,** jamming attack detection and response module **189,** threshold time window and timer module **190,** on authorized operator detection and response module **191,** background map source (select) module **192,** notifications module **193,** and anomaly event historical tracking and recording module **197,** which provides database updating features. Within notifications module **193** are notification parties and contact data **194,** notifications set up and generation module **195,** and notification transmission module **196.** It is appreciated that the functions performed by one or more of the module may overlap and that the presentation of specific modules with specific, functionally-descriptive names applied to the modules is not intended to in any way limit or define the actual makeup of SLTSU **122,** in other embodiments. In addition to the modules within shipment mapping and security monitoring module **184,** SLTSU **122** also includes law enforcement connection module **198** and other security features modules **199,** which serves as a general catch-all for the other modules possible within STLSU **122.**

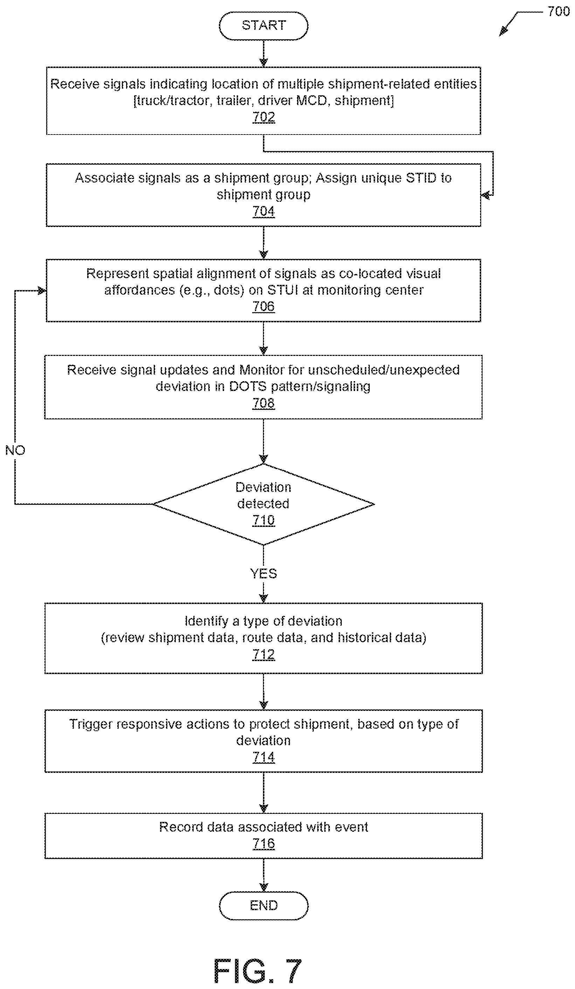

Referring again to **FIG. 1A****,** in one or more embodiments, one or more device interfaces **140,** such as an optical reader, a universal serial bus (USB), a card reader, Personal Computer Memory Card International Association (PCMIA) slot, and/or a high-definition multimedia interface (HDMI), can be associated with DPS **100.** Device interface(s) **140** can be utilized to enable data to be read from or stored to corresponding removable storage device(s) (RSD) **142,** such as a compact disk (CD), digital video disk (DVD), flash drive, or flash memory card. In one or more embodiments, device interfaces **140** can further include General Purpose I/O interfaces, such as Inter-Integrated Circuit (I²C), System Management Bus (SMBus), and peripheral component interconnect (PCI) buses. In accordance with one embodiment, the functional modules (e.g., SLTSU **122)** described herein and the various aspects of the disclosure can be provided as a computer program product. The computer program product includes removable storage device(s) **142** as a computer readable storage medium, on which is stored program code when executed by a processor causes the processor to implement the various functions described herein, including, but not limited to, the features presented in the flow charts of **FIGS. 7****,** **8A****,** **8B****,** and **9****.**

DPS **100** further includes network interface device (NID) **160,** which can include both wired and wireless networking devices (not specifically shown). NID **160** enables DPS **100** and/or components within DPS **100** to communicate and/or interface with other devices, services, and components that are located external to DPS **100.** In one embodiment, DPS **100** may directly connect to one or more of these external devices, via NID **160,** such as via a direct wire or wireless connection. In one or more embodiments, DPS **100** connects to specific external devices, services, and/or components, such as information server(s) **175** and cloud database (DB) **180,** via external network **170,** using one or more communication protocols. In the illustrative embodiment, cloud DB **180** includes respective data storage for CSISTU and SLTSU, namely CSISTU DB **151** and SLTSU DB **182.** Network **170** can be a local area network, wide area network, personal area network, and the like, and the connection to and/or between network **170** and DPS **100** can be wired or wireless (via access point **165)** or a combination thereof. For purposes of discussion, network **170** is indicated as a single collective component for simplicity. However, it is appreciated that network **170** can comprise one or more direct connections to other devices as well as a more complex set of interconnections as can exist within a wide area network, such as the Internet. In one embodiment, CSISTU **120** provides an interactive framework that is accessible via the Internet **(170)** as a website having one or more domain names affiliated therewith.

As one aspect of the disclosure, CSISTU **120** and SLTSU **122** include a plurality of functional modules that execute on CPU **105** to perform specific functions, and these functional modules utilize and/or generate specific data, which data is stored as information and/or data within storage **125** and/or within cloud database **180.** As an example, storage **125** is shown to include CSISTU **120** and CSISTU DB **150,** which includes different blocks of data, including Maps **152,** carrier and operator data **154,** equipment data **156,** and shipper data **158.** Also, cloud database **180** is shown to include a copy of CSIST DB **150.** Both locally-stored and remotely-stored CSISTU DBs **150** store relevant data utilized by CSISTU **120** to perform the personalization of certain UIs and locating of tractor-trailers and/or shipments on a displayed map. Access to the CSIST DB **151** at remote, cloud DB **180** is provided via the connection through network **170.**

Similarly, storage **125** also includes a copy of SLTSU **122** and SLTSU DB **182.** Also, both locally-stored and remotely-stored SLTSU DBs **182** store relevant data utilized by SLTSU **122** to perform the dots mapping and the monitoring for and identifying security breaches and other notification features described herein. In one or more embodiments, SLTSU DB **182** contains historical data about previous shipments, including environmental and other events, such as detected anomalies/deviations in co-location and movement of the dots that correspond to certain types of security breaches. SLTSU DB **182** also contains information about the notifications and other responsive actions that resulted in successful resolution of detected anomalies/deviations and/or confirmed security breaches.

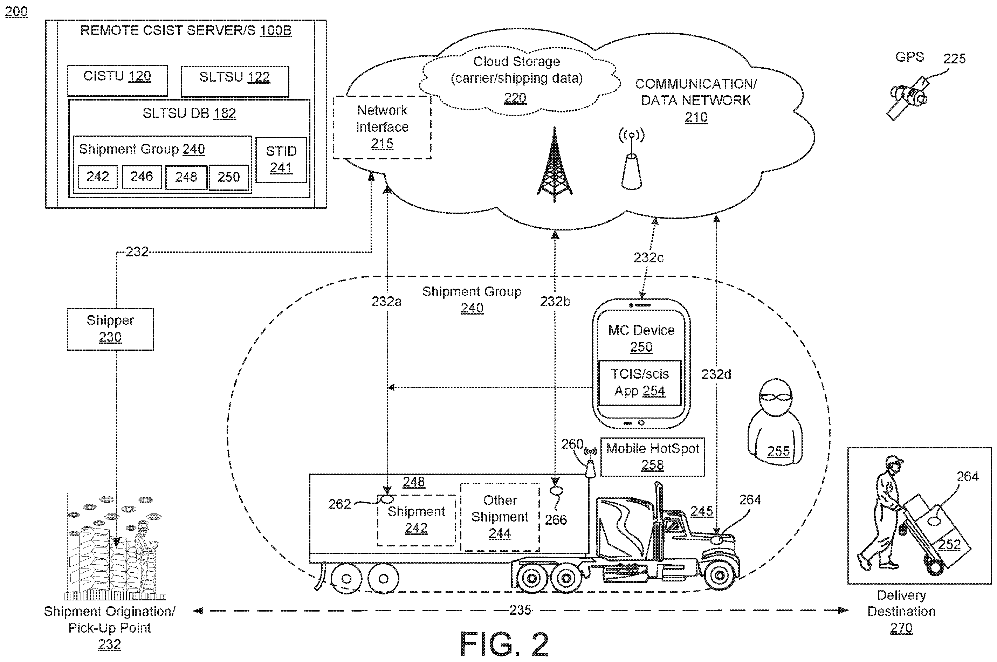

**FIG. 2** illustrates an example communication infrastructure (or communication network environment) **200** that extends the functionality of a CSIST framework to enable the various features and functionality provided by the disclosure. These features and functionality include, but are not limited to, enabling dots-based location tracking of shipment-related entities, monitoring for anomalies indicative of a potential security breach, and identifying the types of anomalies based on changes in the location signals received via communication infrastructure **200** from the different shipment-related entities, according to one or more embodiments. Communication infrastructure **200** generally includes data processing system (remote CSIST server) **100B** within which is provided SLTSU **122** and an associated SLTSU DB **182.** SLTSU DB **182** is shown to include an example shipment group **140,** which includes four shipment-related entities **242, 246, 248, 250.** Shipment group **140** has been assigned a unique shipment tracking identifier (STID) **241** by SLTSU **122.**

Communication infrastructure **200** also includes communication/data network **210** (which can be synonymous with network **170).** Communication/data network **210** includes a plurality of communication devices and subnetworks that enable voice, data, and other forms of communication. Communication/data network **210** supports transmission of wirelessly communicated signals via intermediary receiving devices, such as antennas and access points. Communication/data network **210** also includes cloud storage **220** for storing relevant carrier and shipping data and other historical data utilized by SLTSU **122.** Network interface **215** enables communication of location signals and other data and/or information between data processing system **100** and communication/data network **210.** Communication infrastructure **200** further includes global position satellite (GPS) **225** as an example of one technology for determining a current geographical location of a shipment-related entity, as described herein. Communication infrastructure **200** includes a communication link **232** with shipper **230,** who manages shipment of cargo **242** from shipment origination point **232.** The cargo (or shipment) **242** is transported as a part of a shipment group **240** to shipment delivery destination **270** via a shipping route **235.**

Communication infrastructure **200** further includes a plurality of communication links **232a-232d** each providing location signals transmitted from (or for) a corresponding shipment-related entity within shipment group **240.** As illustrated within communication infrastructure **200,** shipment group **240** is generally comprised of shipment/cargo **242,** tractor-trailer equipment **245** collectively, operator **255** and operator communication device **250**(s), each having a location tracking mechanism for providing a unique location signal that is communicated to data processing system **100** via network **210.** In one alternate embodiment, each of tractor (vehicle) **246** and trailer (container) **248** are equipped with separate location tracking mechanism, such that each can be tracked separately.

As shown, location tracking mechanism **262** of shipment **242** transmits first location signal **232a** to network **210,** location tracking mechanism **266** of trailer/container **248** transmits second location signal **232b** to network **210,** location tracking mechanism **266** of operator's mobile communication device **240** transmits third location signal **232c** to network **210,** and location tracking mechanism **264** of tractor/truck **246** transmits fourth location signal **232b** to network **210.** In one embodiment, the location tracking mechanism placed on/in one or more of the shipment-related entities is a transponder that transmits a unique transponder signal. In other embodiments, the location tracking mechanism can be a more sophisticated device, as is generally known to those skilled in the art. For example, the operator's mobile communication device can rely on cell tower triangulation for location detection or GPS-based location detection.

As illustrated, the operator's mobile communication device **250** is configured with one or more applications, including shipment location tracking, dots generation and tracking app, which enables the localized tracking of the shipment **242** and tractor-trailer **245** by operator, as described in greater detail within the description of **FIG. 10****.**

According to one or more embodiments, location transponder **262** of shipment **242** can be attached to either the exterior or interior of the case or packaging for that shipment **242** or on the cargo itself. According to one or more embodiments, data is accumulated from a plurality of transponders, and the collected transponder signals/data are transmitted back to CSIST server **100.** In one embodiment, all of the transponder data is forwarded to a single collection point within tractor-trailer **245,** and the collected data is compiled utilizing a proprietary compilation method and forwarded via a proprietary protocol for processing via CSIST utility **120** and/or SLTSU **122.** In one embodiment, the transponder is a part of a sensor system that captures different information about or associated with the shipment, including but not limited to: real time positioning; cargo environment, such as temperature and humidity; event occurrence; motion, intrusion, and other activities affecting cargo. In one embodiment, operator equipment (i.e., tractor-trailer **245)** includes a mobile hotspot **260** that enables communication from operator equipment **(245)** back to CSIST server **10B** via communication network **210.**

Communication infrastructure **200** enables efficient communication with carriers or operators and supports the monitoring and tracking of the various shipment-related entities within shipment group **240.** In one embodiment, communication infrastructure **200** is also configured to receive real-time or projected information about the environment, such as weather conditions, along the route **235** that can affect the security of the equipment and/or the cargo, according to one embodiment.

As one aspect, the shipment tracking system of a CSIST framework also provide various types of information about the carriers, operators, trailer-tractor equipment, and shipping routes to facilitate shipper selection of specific carriers for transporting specific shipments, using a selection process for identifying and selecting a best operator and equipment for a particular shipment based on the carrier profiles and other received external inputs. In one embodiment, one important data utilized in selecting the carrier/operator/equipment is inclusion of a location transponder on the tractor-trailer and location tracking capability for the operator's mobile communication device **250.** While not shown, it is contemplated that, in one embodiment, operator **255** can also be provided with a separate transponder to enable a location of operator to be ascertained relative to the shipment, for instances in which operator **255** may leave his mobile communication device **250** inside the tractor or at another location, separate from operator's location. The level of security required for a particular shipment may necessitate the operator **255** agree to wear a tracking device while transporting the shipment.

In another embodiment, as a security measure, the operator's mobile communication device is configured to require a biometric input and a login via the biometric input is required prior to accepting the shipment and at each point when the operator stops the equipment along the route. This prevents another person from being able to drive off with the shipment by stealing the operator's MCD **250.** Additional security measures may be tied to the equipment, including being able to remotely shut off the engine of the tractor when a theft of equipment has been verified and/or the operator does not to provide the biometric confirmation within a provided time period.

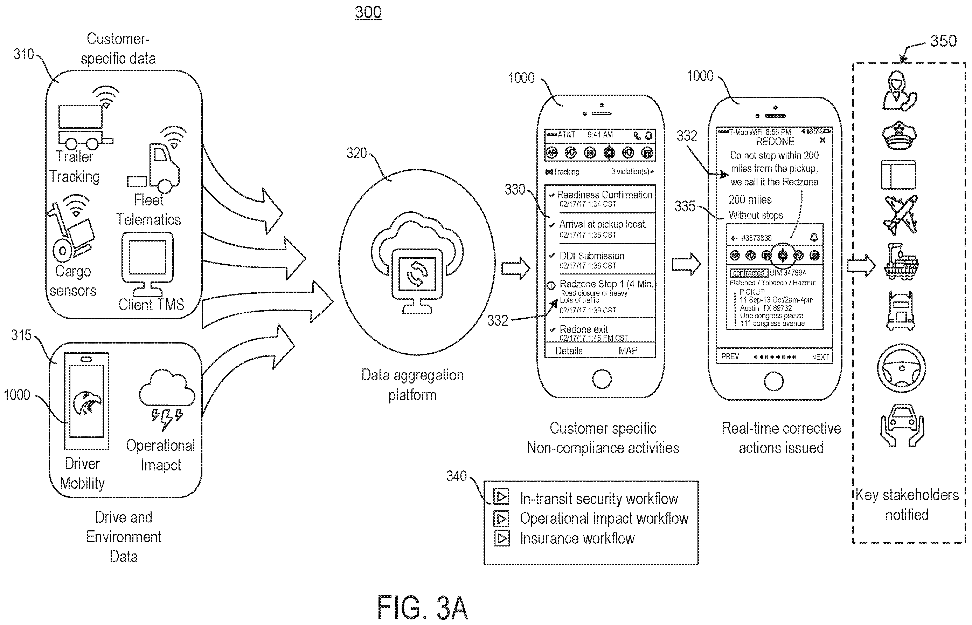

Turning now to **FIG. 3A****,** there is illustrated an example shipment information aggregation and communication environment (SIACE) **300** within which specific aspects of the disclosure are implemented. SIACE **300** includes data aggregation platform **320** that receives a plurality of different types of data, including customer specific data **310** and carrier/operator and environmental data **315.** In one or more embodiments, data aggregation platform **320** is a data processing system or server, such as DPS **100** and/or CSIST server(s) **100B.** Customer specific data **310** includes data received from one or more sensors attached to shipment-related entities that are being tracked and/or information received via a client terminal. Carrier/Operator and environmental data **315** are data received about the carriers and operators (including the operator MDC) and weather conditions, traffic conditions, and other monitored conditions that are available for access and which can impact the shipments. Data aggregation platform **320** provides a set of shipping related information, including shipment data and operational instructions to an operator mobile device, illustrated as MDC **100 (****FIG. 10****).** In one embodiment, the information is downloaded to operator MDC **100** via an operator App that is added to MDC. In one embodiment, the APP includes general setup and monitoring of each shipment assigned to the operator. Details related to the shipment are presented via a shipment user interface (UI) **330** that provides a series of different features and functions and information that are accessible to the operator via the App.

In at least one of the described and illustrative embodiments, a trucking communication interface system (TCIS) module executing on a computing device is modified to include a DOTS tracking utility, which enables the computing device to provide the DOTS tracking and notification features and functionality presented herein to the operator as a downloadable App.

In the illustrative embodiment, a set of shipping parameters or operational directives are presented to the operator's MCD and a compliance check is made by the App whether the operator has stayed within the recommended parameters and objectives. When non-compliance is detected, the specific non-compliant event is flagged and/or identified and corrective actions are provided on a second shipment UI **335.** Included in the information presented by the first shipment UI **330** are customer specific non-compliance activities that are identified by data aggregation platform or by local execution of the App. Included in the information presented by the second shipment UI **335** are real-time corrective actions that are issued to inform the operator to correct the non-compliance. Additionally, a set of user selected options **340** related to various workflow are available through the operator App and displayed within first shipment UI **330** or another UI that is accessible from first shipment UI **330.**

According to one embodiment, in response to detection of customer non-compliance with one of the established shipping parameters or operational directives, a notification is generated and transmitted to the key stakeholders (i.e., interested parties, such as the shipper, recipient, carrier, monitoring entity, etc.) associated with the shipment, generally represented as stakeholders **350.** According to the presented embodiment, the operator has failed to comply with a redzone directive **332,** which requires the operator to drive continuously for a minimum distance (e.g., 200 miles) or minimum amount of time (4 Hours) before stopping once the shipment has been picked up and confirmed by the operator/carrier. In response to the MDC or the background monitoring system (CSIST server **100B)** detecting that the shipment has stopped within the redzone distance, the redzone directive **332** is flagged and/or highlighted on first shipment UI **330** and a notification is generated and issued. Notification **337** is displayed via the second shipment UI **335,** to inform the operator of the redzone directive for the shipment. Additional details about the specific shipment can also be accessed from the second shipment UI **335,** and the operator is able to review those details by selection of associated icons or menu items. Additionally, where corrective actions are available to the monitoring system, the notification can also include this corrective action. For example, an alternate route can be provided to the operator if the environmental data received by the data aggregation platform indicates that the assigned shipment route is congested with a lot of traffic and that an alternate route exists that would allow the operator to comply with the redzone directives. The occurrence of a non-compliance is recorded to a tracking database for use in future carrier/operator shipment assignment and/or later evaluations of shipment routes, etc.

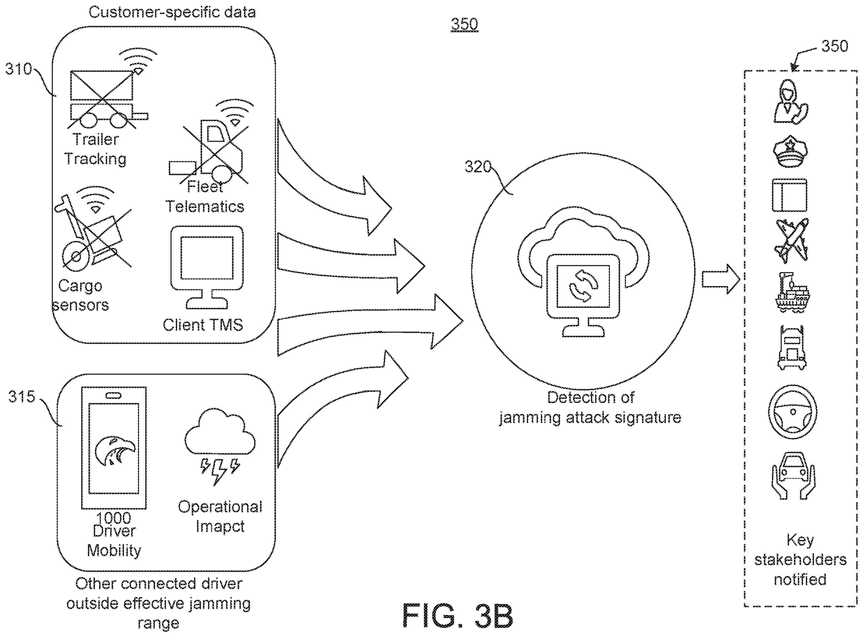

**FIG. 3B** illustrates an example blocked/jammed signal transmission scenario in which the communication infrastructure server or shipment monitoring computing device (i.e., DPS **100** or CSIST Servers **100B)** losses reception of the geolocation signals associated with multiple shipmen-related entities of a single shipment group. As introduced above, the geolocation signals are used to generate and map a corresponding visual affordance, such as a dot that enables tracking and monitoring of the shipment. When a jamming attack occurs, all of the co-located location signals within a shipment are prevented from being transmitted to and received by the data aggregation platform **320.** This scenario typically occurs when the operator is not in the tractor/truck or is not close to the shipment and tractor-trailer, such as when the operator has the tractor trailer while at a truck-stop. With the current example, the jamming attack does not affect the operators MDC. In response to detecting this concurrent loss of multiple signals from the co-located shipment-related entities, data aggregation platform **320** generates an appropriate notification, which is forwarded to a selected one or more of the key stakeholders **350.** Notably, in the example shown, the customer specific data **310** related to the trailer, tractor, and cargo are blocked and are therefore not received by the data aggregation platform **320.** However, because the operator MDC **1000** is not in the immediate location of the shipment/tractor-trailer and has not been blocked, data aggregation platform **320** transmits the generated notification to the operator MDC **1000** to alert the operator via operator MDC **1000** of the jamming attack on the shipment.

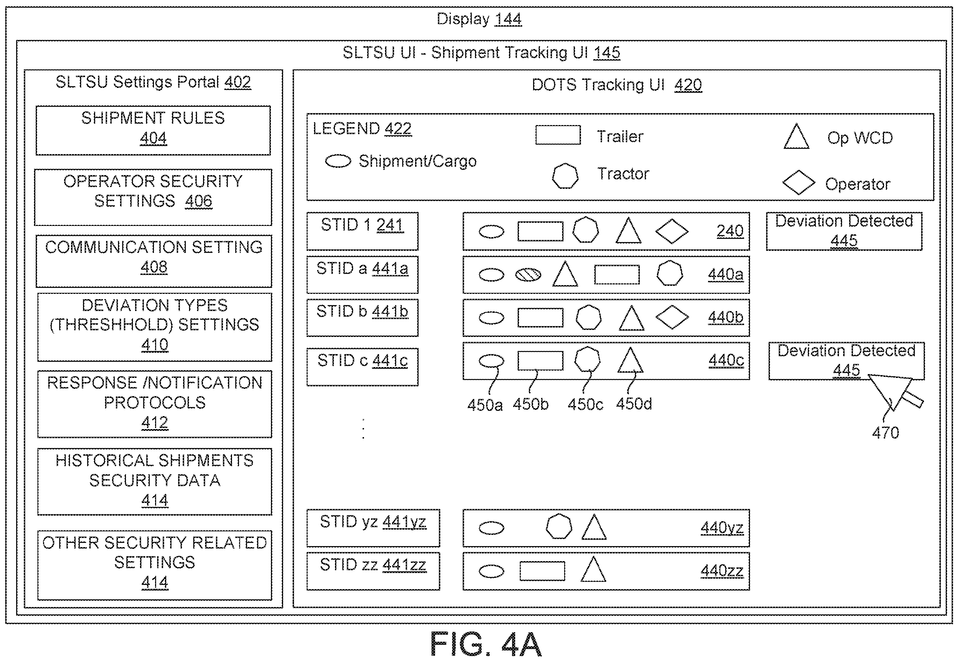

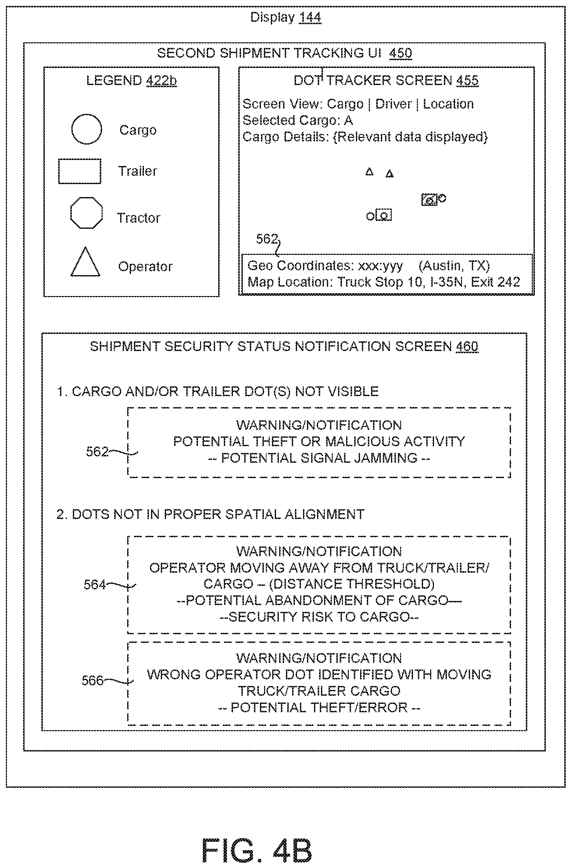

**FIG. 4A** illustrates components and features of STUI **145** presented in display **144** of DPS **100.** As shown by **FIG. 4****,** STUI **145** includes an SLTSU settings portal **402,** in which a plurality of settings can be entered to manage the performance of SLTSU **122** and STIU **145.** Included within SLTSU settings portal **402** are settings associated with shipment rules **404,** operator security protocols **406,** communication **408,** deviation types and associated threshold values **410,** security breach detection response/notification protocols **412,** historical security events data storage **414,** and other related security features **414.**

STIU **145** also includes DOTS tracking UI **420,** which can be synonymous with an interchangeably presented and described as STIU **145,** in some embodiments. DOTS tracking UI **420** includes a legend **422** which identifies a type of visual affordance (i.e., a visible marker) from among a plurality of different types of visual affordances, that is assigned to each of the shipment-related entities in a shipment group. For simplicity, the visual affordances are interchangeably referred to as "dots" throughout the description. Five distinct visual affordances are illustrated, respectively associated with shipment or cargo, trailer, tractor, operator MDC, and operator. Each shipment group **240, 440a-440zz** has an assigned unique STID **241, 441a-441zz.** However, not all shipment groups include all five of the visual affordances, and in particular, most of the shipment groups do not include an operator visual affordance. Also, as presented by shipment group **440a,** multiple different shipments (cargo) can be tracked to a same group **440a.** Specifically, as shown, a second shipment (e.g., other shipment **244)** being transported by the same tractor-trailer and have its own unique location signal can be simultaneously tracked within the created shipment group **440a.** Different distinguishing characteristics (e.g., a striped pattern representing a different color) can are assigned to the different dots within the shared shipment group **440a.** In one embodiment, each piece of cargo can be visually presented with a different dot type (e.g., color or shape), which allows for selection and specific identification of the specific cargo relative to the other cargo being tracked by associated dots. In another embodiment, each operator is also uniquely identified relative to other operators (e.g., assigned a unique operator ID), and each truck or other shipping vehicle is provided a unique signature and is thus trackable via that unique signature. The unique signatures of the location signals are wirelessly transmitted to a monitoring station, such as CSIST server **100B,** via a network entity, such as a base station or access point.

Additionally, as illustrated by the last two shipment groups **440yz, 440zz,** the tractor-trailer can be represented by a single visual affordance when only one transponder is associated with the combined tractor-trailer equipment. Thus, the SLTSU **122** configures the DPS **100** to visually present each shipment-related entity within a shipment group as visually distinct dots on the shipment tracking UI, using one or more of (i) a different dot type and (ii) different characteristics of a same dot type.

STIU **145** is also provided to illustrate the detection of a deviation in two of the presented shipment groups. In the illustrated embodiment, SLTSU **122** generates a deviation detected/notification icon **445** and highlights the group for which the deviation is detected. It is appreciated that in other embodiments, the presentation of the icon **445** can be optional, and SLTSU **122** can configured the DPS **100** to simply highlight one or more of the STID **241, 441** or the shipment group **240, 440** for which the deviation is detected. In yet another embodiment, the deviation can be signaled by highlighting a specific one of dots (e.g., one of visual affordance **450a/450b/450c/450d)** from among the plurality of co-located visual affordances **450a, 450b, 450c, 4150d** of shipment group **444c** for which the deviation is detected. As thus presented by **FIG. 4A****,** the SLTSU **122** further enables DPS **100** to generate and display, on the display device, the first shipment tracking user interface (UI) displaying each of a plurality of shipment groups being simultaneously tracked, and to indicate, within the first shipment tracking UI, when an anomaly has been detected in one of the plurality of shipment groups.

In one embodiment, a listing of the shipment groups is presented. However, in alternate embodiments, shipment groups are presented according to their geographic locations on a map of a monitored area or areas. With the alternate embodiment, an option to toggle between a geographic map view and a list view is provided, and the list that populates the list view then corresponds to the shipment groups within a particular selected geographic location (e.g., Austin, Texas). In one embodiment, SLTSU **122** can present within STUI selectable options for entry of a street address or other geographic coordinate to narrow the range of shipment groups presented on the STUI. Additionally, in one or more embodiment, different views can be pre-programmed for searching. For example, SLTSU **122** can be pre-programmed with options for searching by carrier, shipper, recipient, type of shipment, origination of shipment, destination of shipment, route being taken, or general text based (word or context matching) query. It is appreciated that the list is not exclusive and not intended to convey any limitations with respect to the options provided for generating specific lists of shipment groups being tracked/monitored via co-located visual affordances or dots.

As further illustrated by **FIG. 4A****,** DPS presents each location tracking signal within a shipment group as a separate visual affordance co-located with other visual affordances, each corresponding to the location tracking signal of a shipment entity within the shipment group. In one embodiment, DPS **100** also co-locates and presents the visual affordances representing each of the received location signals with a spatial alignment showing a separation distance of the shipment-related entities. Based on the type of location signaling mechanism, DPS **100** periodically receives updated location signals from one or more of the shipment-related entities and updates the presentation of the plurality of co-located visual affordances on the UI based on the updated location signals.

Additionally, in one embodiment, the SLTSU further enables DPS **100** to provide a geographic mapping of the plurality of co-located dots on the UI (e.g., by superimposing the dots on a map of the specific area) and compare a present location of the co-located dots to at least one of an intended shipment delivery destination and a current expected location of the shipment. DPS **100** identifies, based on the present location, if there has been a route deviation by the operator that is outside of an acceptable range of deviation from a pre-scheduled route, and DPS **100** generates and transmit at least one notification signal to inform one or more of the operator, the carrier, the shipper, or other interested party about the deviation and to correct the deviation.

**FIG. 4B** illustrates an example second STUI for a single shipment group that is selected (such as by pointing device **470)** from among the available signal groups within first STUI **145** of **FIG. 4A****.** Second STUI **450** is opened on display **144** as a new window or an embedded window within first STUI **145.** Second STUI **450** includes legend **422b** presenting a mapping of the shipment-related entity begin tracked with the corresponding visual affordances or dots that are assigned to that shipment-related entity. Second STUI **450** also includes a DOT tacker screen **455** within which is displayed a set of dots related to one or more shipment within single geo-location. In the presented embodiment, the geo-location is a truck stop or fuel stop and a first shipment group that is being tracked and for which the second STUI **450** was opened is presented within DOT tracker screen **455,** with the relative position of each shipment-related entity identified thereon. Additionally, for security and other reasons, dots associated with a second shipment group, which is in the same general location as the first shipment group are presented within the DOT tracker screen **455** for the first signal group. The second shipment group is identified with hashed dots. In one embodiment, if the operator dot for the second shipment group becomes co-located with and moves in unison with the equipment and shipment dot of the first shipment group, an anomaly is detected and a series of responsive actions are taken to protect the shipment from being taken by the wrong ("un-authorized") operator. DOT tracker screen **455** includes a geo-location coordinate bar that provides the actual geographic and/or GPS and/or map location of the shipment group.

At the bottom of STUI **450** is a shipment security status notification screen **460,** which provides a current notification status of the shipment. The notification status can include one or more detected anomalies and their corresponding notification/warner messages **562, 564, 566** that is displayed within STUI **450.** Three of the possible scenarios that trigger a corresponding notification **562, 564, 566** are presented. While all three notifications **562, 564, 566** are simultaneously shown within STUI, in the illustrated embodiment, it is appreciated that in actual execution, only one notification would be generated and displayed, based on the actual detected anomaly, unless multiple anomalies are simultaneously detected.

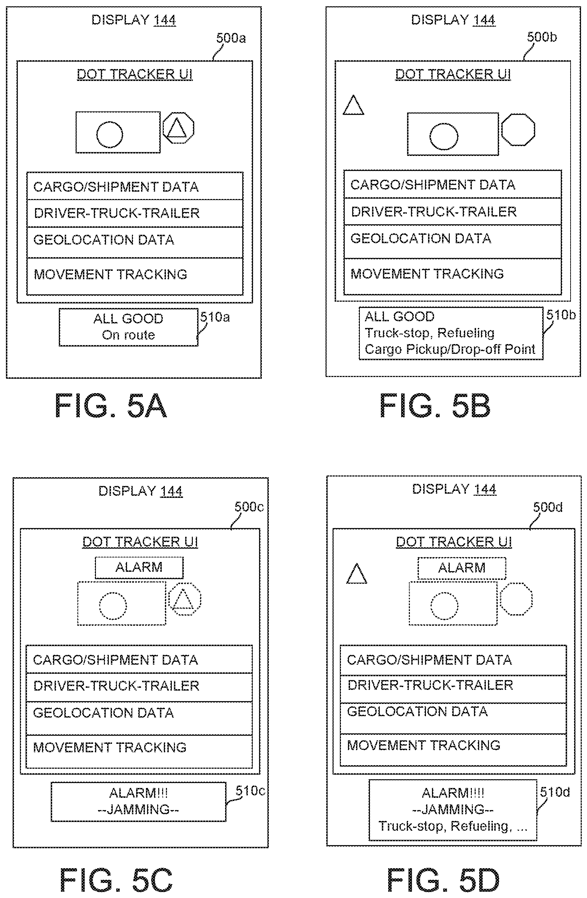

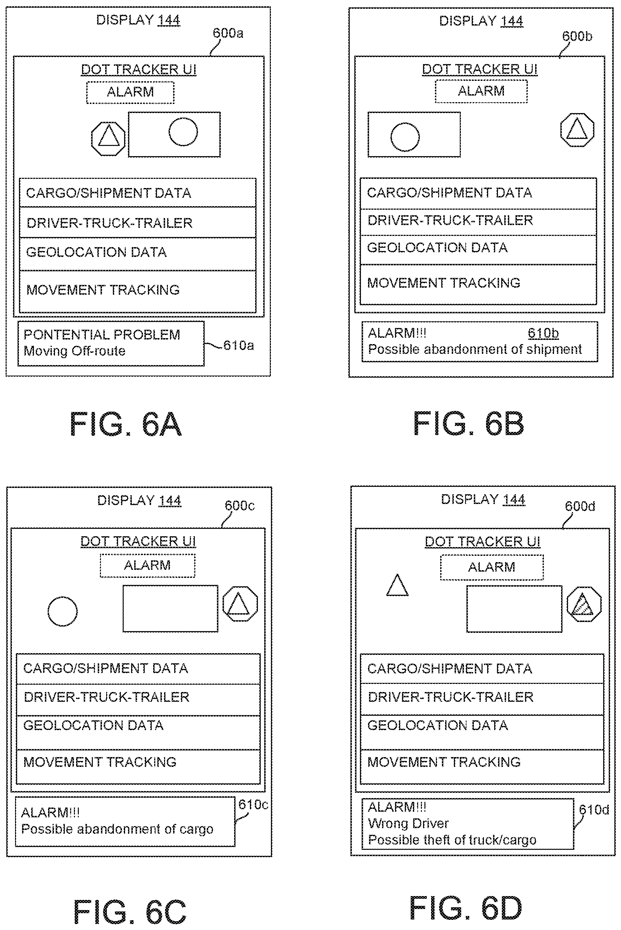

Referring now to **FIGs. 5A-5D** and **6A-6D,** there are illustrated several different examples of the types of deviations that can be detected by SLTSU **122** based on the presentation and relative spacing of the dots on STIU **145.** **FIGs. 5A-5D** and **6A-6D** are a plurality of example dots tracking user interfaces (UI) presenting focused views of a single shipment group that is selected from among the plurality of shipment groups presented within STIU **145** of **FIG. 4****.** In **FIG. 5A-5D****,** each dots tracking UI **500** includes a status notification bar **510** that presents a current status of the corresponding shipment based, at least in part, on the presence, relative alignment, and movement of the dots representing the shipment-related entities within a shipment group. In addition to the status notification bar **510,** each dots tracker UI **500** includes additional information/data about the particular shipment, operator and tractor-trailer equipment, geolocation data, and movement tracking data, each of which can be selected by a user to present additional relevant details about the selected item. Within the various figures, immediate visual notification of an anomaly, deviation, or other condition that triggers a potential security breach is presented as bolded font. In actual implementation, the visual notification can be an applied highlight color or flashing of specific content within the UI **500.** Notably, in addition to the notification or alert being highlighted, relevant sets of tracking information related to one aspect of the shipment can also be highlighted (bolded) to direct the monitoring personnel's attention to access that relevant/associated tracking information.

In one or more embodiments, **FIGs. 5A-5D** and **6A-6D** are generated in response to selection of one STID **241, 441,** selection of one shipment grouping **240, 440,** or selection of deviation notification icon **445** within STIU **145,** or more specifically, within DOTS tracking UI **420.** Thus, SLTSU **122** configures DPS **100** to perform the functions of: in response to detecting a selection of the unique STID or visual affordance of a specific shipment group being displayed STIU, generate and display, on the display device, a second shipment tracking UI that provides detailed information about a corresponding shipment and a current or last recorded location of each shipment-related entity of the shipment group relative to a location of each other shipment-related entity within the shipment group and in relation to a geographic or location coordinate of the shipment-related entities. In one embodiment, in response to placing the shipment in the enhanced watch/monitoring state, DPS **100** automatically generates and displays a second shipment tracking UI (e.g., dots tracking UI **500a,** **FIG. 5A****)** providing additional shipment details corresponding to the shipment and the shipment-related entities comprising the shipment group.

Referring to **FIG. 5A****,** there is illustrated first example dots tracking UI **500a** in which the dots are spatially aligned in the correct order and within the acceptable range of distance from each other. Additionally, the dots are moving in unison with each other, at an acceptable velocity along a shipment route towards a delivery destination. With these conditions, SLTSU provides an ALL GOOD notification as there are no deviations or anomalies detected that present a security risk to the shipment. It is appreciated that the spatial alignment of the dots and separation distance are parameters that can be different from one shipment to another. In the illustrated embodiments, the shipment dot is expected to be within or proximate to the trailer dot, while the tractor dot is expected to be ahead of both dots when moving towards the intended delivery destination (assuming the route information is known and including in the shipping information stored by within the SLTSU DB **182).** Further, the operator MDC dot and/or the operator dot is expected to be inside of in close proximity to the tractor dot when the shipment is moving.

In each of the presented embodiments, the operator's location is tracked via the location signal received for operator MDC, and both are assumed to be synonymous and in the same general location. To account for periods in which the operator may stop for fuel or rest or other expected reasons, a separation distance is provided for at least one of the co-located dots and the operator/operator MDC dot and vice versa. As an example, a separation distance of 100 meters is provide as a threshold maximum distance that the operator will be away from the tractor trailer and/or the shipment during normal transportation periods. Any detection of a separation distance above this threshold will be considered a deviation and will cause SLTSU **122** to cause DPS **100** trigger a notification of potential security risk.

In another embodiment, the disclosure provides for monitoring and tracking of an unscheduled and/or unexpected separation event, such as one or more of the dots that should remain collocated in the same geolocation moving away from the other dots. As one example, the separation event can include the tractor/truck moving away from the trailer. As another example, the separation event can include one of the cargo dots moving away from the trailer or vice-versa outside of an intended pick-up or drop-off location for that specific cargo. An appropriate set/sequence of notifications and/or responses is generated based on the collected data related to the event.

**FIG. 5B** illustrates second dot tracker UI **500b** in which the operator has left the tractor, but is within an acceptable separation distance from the shipment. More specifically, SLTSU **122** has deduced that operator has stopped at a truck stop and/or is refueling, based on the geographic location map of the area in which the tractor-trailer is parked. Alternatively, in one embodiment, the shipment may have arrived at a known/expected drop off point (or operator rest area), such that operator separating from the shipment and/or the tractor-trailer is acceptable.

**FIG. 5C** illustrates third dot tracker UI **500c** in which the location signals for the entire group of shipment-related entities become undetected for a period of time. In at least one embodiment, the concurrent loss of all location signals triggers SLTSU **122** to generate a warning of a jamming attack and notify the operator and others about the detected attack. Thus notification status bar **510c** clearly indicates this alert status. According to one aspect, the amount of time is a programmed parameter that can depend on other information related to the shipping route, geographic location, etc. For example, when the loss of visible dots (i.e., location signals) occurs while the shipment is determined to be moving in a tunnel, the time period can be set to an amount of time expected for the tractor-trailer to exit the tunnel. Other environmental scenarios would trigger a different time period or no delay at all. In the above embodiment, a determination of a potential problem is made (and responsive actions taken) only if a signal loss condition continues/lasts more than a pre-set threshold amount of time. This allows the system to account for detected loss of signal that may be caused by a faulty transmitter or entry into a tunnel located on route, etc.

**FIG. 5D** illustrates fourth dot tracker UI **500d** in which the location signals for only some of the group of shipment-related entities become undetected. In this specific scenario, the operator is at a truck stop and away from the tractor-trailer. Notification status bar **510d** thus provides the warning about the jamming attack, but also presents additional details related to the environment and/or location that may be helpful to counter the attack.

**FIG. 6A** illustrates fifth dot tracker UI **600a** in which a directional movement of the dots for a shipment group indicates that the shipment is being driven off-route. SLTSU **122** triggers an alert that is displayed within notification status bar **610a** indicating that the shipment is being moved off-route. This trigger can, in one embodiment, require the shipment be a threshold minimum distance (e.g., 1 mile) off route before the notification status bar is updated to reflect the alert. A check of the traffic conditions and other environmental conditions can also be integrated in the determining process to identify if there is a valid reason for the operator to have changed routes.

**FIGS. 6B-6C** illustrates two scenarios that involve an unscheduled separation of dots in respective dots tracker UIs. In **FIG. 6B****,** sixth dot tracker UI **600a** shows the operator and tractor moving away from the trailer and cargo at a rate of speed and for a time period that indicates the operator may be abandoning the shipment. Notification status bar **610b** is updated to provide this warning/alert. In **FIG. 6C****,** a similar alert can be reported via notification status bar **610c;** however, in this embodiment, the shipment has been removed from the trailer and is being left at a location that is not the delivery destination. DPS **100** therefore determines the separation may likely be an abandonment of the cargo. Alternatively, depending on the location at which the cargo was removed from the trailer, SLTSU **122** can determine that an incorrect drop-off of shipment has occurred. In either scenario, SLTSU **122** triggers a series of responsive actions, which can include communicating this error to the operator's MDC or the carrier.

In one or more embodiments, monitoring for separation events is further extended to include monitoring for and identifying an unattended vehicle scenario in which the driver leaves the truck/trailer at a location that is not within the expected zone of driver separation. For example, the driver may either abandon a shipment/cargo and/or simply take a unscheduled stoppage of his transport of the shipment by leaving the truck and trailer at a truck stop or other parked location and moving away from or outside of the expected "safe zone" (e.g., 50 yards/meters) from the truck/trailer. A rate of driver movement away from the shipment (as identified by the velocity of the moving driver dot) can indicate the driver is in another vehicle that is moving away from the location of the truck/trailer/cargo. An appropriate set/sequence of notifications and/or responses is generated based on the collected data related to the event.

**FIG. 6D** illustrates, via sixth dot tracker UI **600d,** the scenario in which the wrong operator takes a shipment (i.e., either the cargo or the trailer loaded with the cargo). This situation can occur at a shipping port or shipment transit point at which the shipment is left to be picked up by an authorized operator. When the shipment begins to move from port and the authorized operator is not the one who picks up the shipment, STLSU configures DPS **100** to recognize that the location signal of the shipment is co-located with the wrong driver or that the location signal of the shipment is moving away from the transit point without being co-located (and thus move in unison) with the location signal of the authorized operator. It should be noted that this scenario also applies to a theft of a tractor-trailer with onboard shipment, such as when the operator is at a truck-stop or another location outside of the tractor but the shipment is detected moving away from the operator. STLSU **122** configures the DPS **100** to generate a notification of a possible theft of the shipment and displays that notification on notification status bar **610d.**

Referring now to **FIG. 7****,** there is presented a flow chart of one method by which the devices and infrastructure of the preceding figures are utilized to present certain aspects of the shipment monitoring and security features of the present disclosure. Within the preceding figures, and according to one aspect of the disclosure, there is presented data processing system **100,** which includes a memory **110** having stored thereon a shipment location tracking and security utility (SLTSU) **122.** DPS **100** also includes a display device **144** that enables visual presentation of at least one graphical user interface (UI) **145** generated by the SLTSU **122.** DPS **100** further includes at least one network interface device (NID) **160** that enables the DPS **100** to receive and transmit information via one or more communication networks **170/210.** DPS **100** further includes at least one processor **105** coupled to the memory **110,** the display device **144,** and the at least one NID **160.** The processor **105** executes the SLTSU **122** to enable DPS **100** to perform the features illustrated by method **700** of **FIG. 7****.**

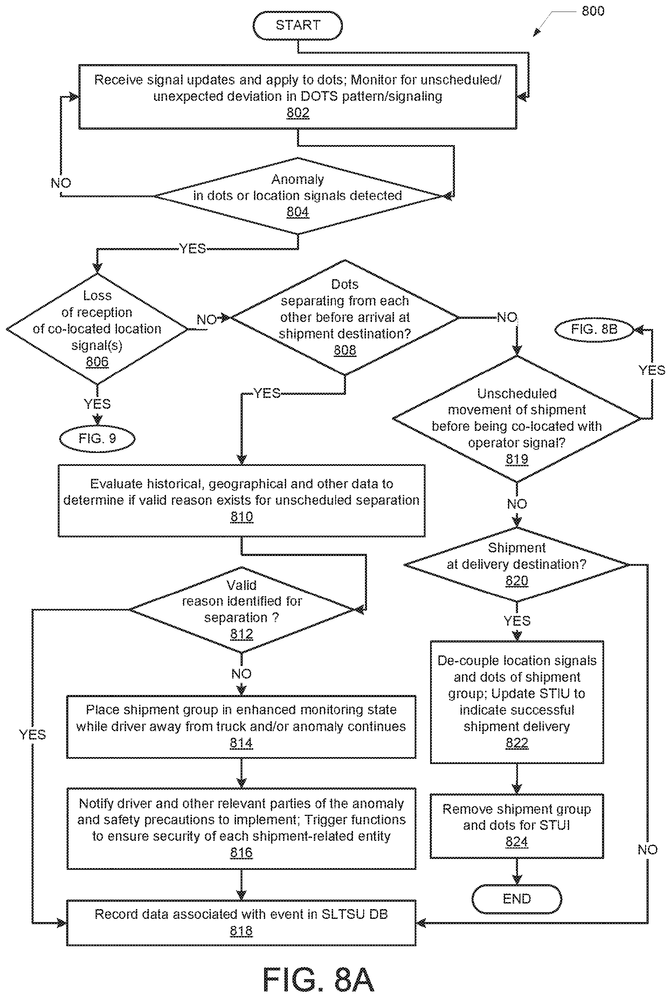

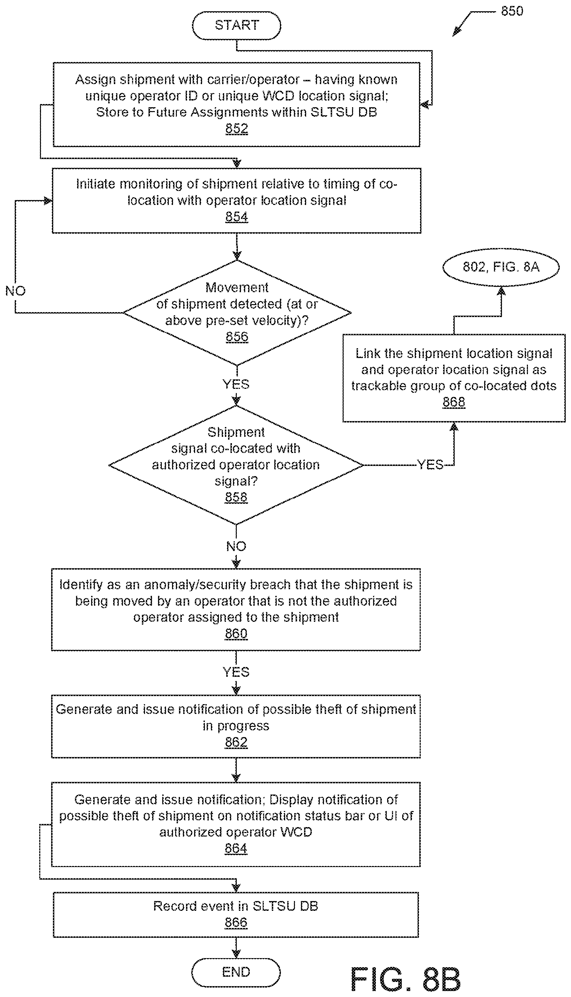

For simplicity, each of the presented methods (i.e., 700, FIG, 7, 800, FIG. 8, and 900, FIG. 9) are described from the perspective of DPS **100** performing the various described functions. It is appreciated that DPS **100** is configured to perform the various functions based on execution of SLTSU **122** by processor **105.** Further, certain of the functions are performed by other components of DPS **100,** such as the receiving and transmitting of location signals and notifications, respectively, which are, in part, performed by NID **160 (****FIG. 1****).**

As provided by **FIG. 7****,** the SLTSU **122** enables/configures DPS **100** to receive, via the at least one NID, a plurality of location tracking signals indicating a location of multiple shipment-related entities that are being tracked concurrently as a shipment group (block **702).** SLTSU **122** configures DPS **100** to associate the location tracking signals as a shipment group and assign a unique shipment tracking identifier (STID) to the shipment group to track movement of the location tracking signals (represented as co-located dots) relative to each other and to a shipping route **235** (block **704).** At block **706,** and with specific reference now to **FIGs. 4 - 6****,** SLTSU **122** configures DPS **100** to present the shipment group **240** as a plurality of co-located visual affordances **450a, 450b, 450c, 450d** on a shipment tracking user interface (UI) **145 (****FIG. 4****),** where each location tracking signal is represented by one visual affordance **450a/450b/450c/450d** from among the plurality of co-located visual affordances **450a, 450b, 450c, 450d.**

DPS **100** is further configured to monitor for any unscheduled deviations in at least one of an expected co-location and an expected geo-location of received updates to the location tracking signals within each shipment group being tracked (block **708).** In response to detecting (at decision block **710)** an unscheduled deviation, DPS **100** is further configured to identify a specific type of the unscheduled deviation (block **712),** and, based in part on the specific type of the unscheduled deviation identified, trigger a series of responsive actions to protect the shipment (block **714).** DPS **100** is further configured to record data associated with the event (block **716).** Then, method **700** completes at end block.

It should be appreciated that the cycle of monitoring the shipment will continue until the shipment is delivered to the end destination or other measures are taken to stop monitoring the shipment group. Also, in one embodiment, the detection of and response to a deviation includes the DPS **100** determining, from metrics associated with the detected change and previous patterns of behavior of input signals, whether the detected change indicates a potential bad and/or malicious and/or illegal and/or financially detrimental act directed towards the shipment. In response to determining that the detected change is indicative of a bad act associated with the shipment, DPS **100** triggers responsive actions to one or more of (i) prevent the occurrence of the bad act or (ii) to mitigate/reduce (a) a timing of response to and/or (b) an effect on the shipment caused by the bad act.

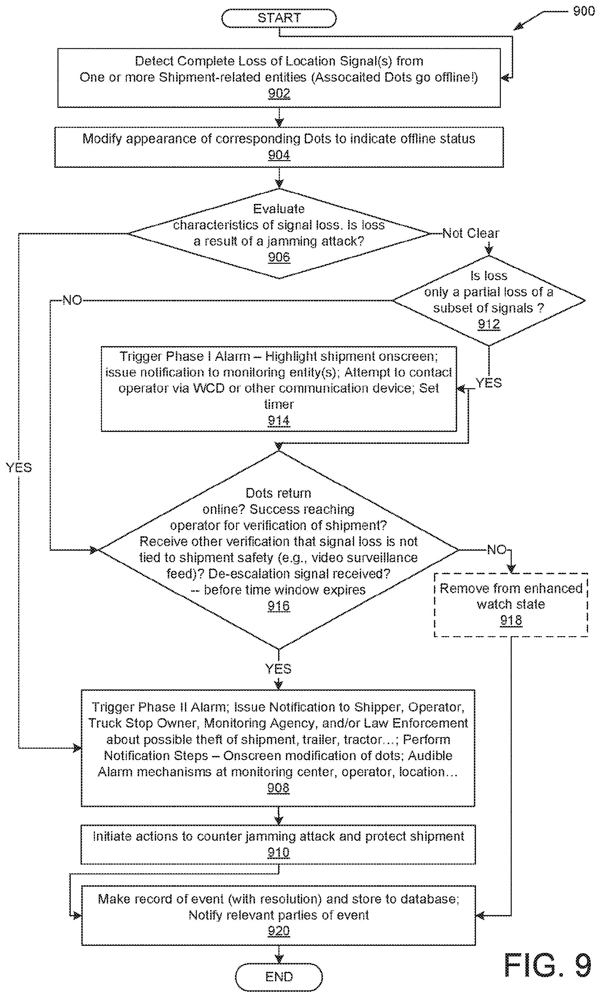

Referring now to the flow chart of **FIG. 8A-8B****,** there is illustrated an example method **800** in which the specific type of deviation is determined and corresponding responsive actions thereto are triggered. **FIGs. 8A-8B** expands on the processes of block **706-714** of **FIG. 7****,** according to one or more embodiments. Beginning at block **802,** DPS **100** receives location signal updates, assigns the updates to the corresponding dots, and modifies the location of the dots within the shipment groups based on the location signal updates, and monitors the update for any unscheduled or unexpected deviations or anomalies in the dots pattern or in the received location signals. At block **804,** STLSU **122** configures DPS **100** to detect an occurrence of an anomaly that can include one or more of (i) loss of reception of the location signals from one or more of the shipment-related entities, (ii) unscheduled changes in a spatial relationship of the shipment-related entities or corresponding visual affordances on the STUI, and (iii) a movement of shipment dot from pick-up location before being co-located and grouped with operator dot, indicative of an unauthorized taking of shipment. DPS **100** determines via blocks **806, 808,** and **820** whether the anomaly is (i) a loss of reception of the location signals from one or more of the shipment-related entities (decision block **806),** (ii) unscheduled changes in a spatial relationship of the shipment-related entities or corresponding visual affordances on the STUI (decision block **808),** or (iii) a movement of shipment dot from pick-up location before being co-located and grouped with operator dot, indicative of an unauthorized taking of shipment (decision block **810).** In response to the anomaly being a loss of reception (as determined at block **806),** method **800** transitions to the process of method **900** presented by **FIG. 9****.**

In response to determining (at decision block **808)** that the detected anomaly is/includes an unscheduled change in spatial relationship (i.e., separation) of the co-located dots (and thus the shipment-related entities) from each other before a shipment delivery at the intended destination, DPS **100** determines if there is a valid reason for the unscheduled separation by evaluating historical data and received data about the shipment-related entities, the route, geographic location at which the unscheduled separation occurs, and received environmental conditions (block **810).** In response to not identifying a valid reason for the unscheduled separation, as determined at block **812,** method **800** includes SLTSU configuring DPS **100** to flag the shipment for enhanced monitoring (block **814),** trigger security measures to alert relevant parties of the occurrence of the anomaly (block **816),** and create and store a record of the occurrence of the anomaly (block **818).**

Returning to block **808,** in response to the anomaly being an unscheduled change in directional movement of the dots relative to each other, method **800** transitions to method **850** of **FIG. 8B****.** Assuming the detected anomaly is not one of the aforementioned anomalies, method **800** transitions to decision block **820** at which DPS **100** determines if the shipment and associated separation of dots from each other or disappearance of dots from the tracking system is occurring at the delivery destination. In one embodiment, in response to the separation or disappearance of the dots occurring at the shipment delivery destination (as determined at block **820),** DPS **100** de-couples the location signals within the shipment group and updates a shipment tracking system to indicate that the shipment has been delivered (block **822).** DPS **100** also updates the shipment tracking UI to remove the shipment group and plurality of co-located visual affordances used for tracking the shipment group (block **824).** Method **800** then ends.

According to one embodiment, to enable the DPS **100** to monitor for any unscheduled deviations, the STLSU configures DPS **100** perform at least one of: (a) compare a present geographic location of the visual affordance on a geographic location mapping to an expected geographic location, based on a prescribed route for the shipment; and identify whether there has been a route deviation by the operator; (b) monitor for changes in an alignment pattern and separation distance of the visual affordances corresponding to each of the shipment-related entities within the shipment group, relative to an expected alignment and separation distance; and (c) monitor for specific changes in a reception of the input location signals, which specific changes are changes that are indicative of an anomaly.

Referring now to **FIG. 8B****,** there is illustrated an example method **850** by which the anomaly/deviation involves an incorrect operator taking a shipment, as illustrated above with sixth dot tracker UI **600d** of **FIG. 6D****.** With continuing reference to the illustration of **FIG. 6D****,** method **850** begins at block **852** with a shipment being assigned to and associated (e.g., by the CSIST server, DPS **100,** shipper, or other associated entity) with an authorized operator (and operator equipment). The assignment/association is stored within SLTSU DB and the shipment is then monitored for co-locating purposes with the location signal of the authorized operator (block **854).** Following detected movement of shipment by at least a minimum distance from a shipping port, at a velocity that indicates the shipment is being moved out of the port (block **856),** a determination is made (block **858)** of whether the shipment has been co-located with the authorized operator (i.e., the shipment is not being moved by someone who is not the authorized operator). In response to the shipment not being co-located with the authorized operator, STLSU configures DPS **100** to determine/recognize that the location signal of the shipment is co-located with the wrong driver or that the location signal of the shipment is moving away from the transit point without being co-located with the location signal of the authorized operator (block **860).** STLSU **122** configures DPS **100** to identify a security breach involving the shipment being taken by someone who is not the authorized operator for that shipment **(862).** STLSU **122** configures the DPS **100** to generate a notification of a possible theft of the shipment in progress (block **864)** and to display that notification on notification status bar **610d** or on a user interface of the authorized operator's MDC (block **866).**

According to one embodiment related to assignment of and pickup by an operator to a future shipment, SLTSU configures DPS **1000** to identify an intended operator and shipping vessel assigned to a future shipment awaiting pickup by the intended operator, the intended operator having an operator ID and a communication device that provides a unique device location signal that is associated with the operator ID, the shipment also having a unique shipment location signal. DPS **100** associates the operator ID to the future shipment. DPS **100** then monitors a geo-coordinate location of the future shipment prior to pick-up by the operator. In response to a received signal indicating the operator has picked-up the shipment, DPS **100** links and co-locates the unique operator device (MDC) location signal and unique shipment location signal to create and track a new shipment group (block **868).**

While monitoring for the pickup, DPS **100** is also configured to identify an anomaly from among: (i) detecting a change in the geo-coordinate location of the shipment by more than a first threshold distance prior to the unique shipment tracking signal being co-located with the unique device location signal; and (ii) detecting that a second operator device signal, different from the unique device location signal, is co-located with and begins to move in unison with the unique shipment tracking signal, where the second operator device signal is not associated with the operator or a second operator that has been assigned to transport the shipment. In response to identifying the anomaly, DPS **100** is configured to trigger a series of responsive actions designed to prevent or stop an un-authorized operator from taking the shipment.

According to one embodiment, the method includes receiving a signal from one or more shipment-related entities, including a shipment/cargo tracker and possibly including a trailer transmitter/responder. The method includes identifying, as an intended driver of the shipment, a specific driver having a corresponding operator MCD (e.g., a smart phone) that provides a unique operator signal, and also includes matching the unique operator signal to the shipment associated entities; monitoring the signals received from the shipment associated entities and the unique driver signal to identify when the signals become collocated and begin to move in unison. The method further includes identifying when a different driver signal approaches and/or begins to move in unison with the other tracked signals. The method incudes, in response to identifying that a different driver signal is collocated with the other signals, performing a series of responsive actions, based on a determination that the incorrect driver is taking the shipment. The responsive actions can include one or more of, but are not limited to, notifying the correct driver, recording the incident, signaling the different driver, notifying law enforcement, etc.

**FIG. 9** provides a flow chart of the method for responding to an anomaly that involves the loss of one or more of the location signals of at least one shipment entity associated with a shipment group, as illustrated by **FIGs. 5C** and **5D****.** Method **900** begins at block **902** at which DPS **100** detects a complete loss of at least one location signal from a corresponding one or more of the shipment entities. In response to the detected complete loss, DPS **100** removes or modifies (by ghosting the appearance or flashing) the visual affordance corresponding with the location signal for that shipment entity within the STUI (block **904).** At decision block **906,** DPS **100** determines, based in part on characteristics associated with the loss of the at least one signal, whether the loss is a result of a jamming attack at the location of the shipment. In response to determining that the resulting loss is a result of a jamming attack, DPS **100** generates and issues, to relevant parties, a specific notification that identifies detection of the jamming attack and possible attempts to steal shipment and/or equipment (block **908).** The notifications can be visual on-screen notifications and/or audible alarms, and the like. DPS **100** initiates one or more actions to counter the jamming attack and protect one or more of the shipment-related entities from bad act (block **910).** DPS **100** records the event and any resolution thereof to SLTSU DB **(916)**

According to one embodiment, DPS **100** determines at block **912** whether the loss is a partial loss of received location signals, affecting only a subset of the shipment-related entities within the shipment group. In response to the signal loss being a partial loss, DPS **100** triggers a low level alarm event and sets a timer to track an amount of time that elapses following detection of the partial loss of signal (block **914).** DPS monitors (via decision block **916)** whether partial loss of received location signal is resolved before expiration of a pre-established time window. In response to the partial loss being resolved within the pre-established time window, DPS **100** generates and stores a record of the event as a recovered, partial loss of signal incident occurring at a geographic location of the shipment-related entity when the loss occurred (block **920).** However, in response to the partial loss condition not being resolved within the pre-established time window, method **900** transitions to block **908** and DPS **100** triggers a higher level alarm status and generates real-time alerts and notifications of potential theft of one or more of the shipment-related entities. Accordingly, in the illustrated embodiment, in response to one of (i) all of the dots simultaneously disappearing for more than the pre-established window of time and (ii) not receiving the de-escalation signal prior to expiration of the pre-established window of time when only a subset of the location signals disappear from the monitoring system, DPS places the shipment in an elevated danger state and triggers a higher level alarm to initiate a series of responsive operations and actions.

In one embodiment, DPS **100** sets a timer for a pre-established window of time before the notification is issued (block **914).** At decision block **916,** DPS **100** checks whether a de-escalation signal is received from a trusted party providing a verification of a safety of the shipment prior to expiration of a pre-established window of time. In response to receiving the de-escalation signal prior to expiration of a pre-established window of time, DPS **100** optionally (as illustrated by dashed border lines) removes the shipment from the enhanced watch/monitoring state (block **918),** and records the event and subsequent de-escalation thereof within the SLTSU DB (block **920).**

According to one or more embodiments, and as illustrated by **FIGs 2****,** and **5B****-5D** and **6A-6D,** in performing the series of responsive actions based on the specific type of deviation identified, DPS **100** performs at least one of the following: high-light, on the shipment tracking UI, a corresponding visual affordance or the unique ID one of the shipment group for which the deviation is detected; output at least one of an on-screen visual notification and an audible notification to alert a monitoring personnel about the detected deviation; and communicate the notification to a remote communication device of at least one of an operator and a shipper associated with the shipment to provide real-time notification of the deviation. Additionally, in response to the deviation being a concurrent or substantially simultaneous loss of a plurality of the location signals within a single shipment group, DPS **100** issues a notification that includes an alert to one or more communicatively-connected parties of a potential jamming attack that may indicate malicious intent towards one or more of the shipment entities.

According to one aspect, storage of DPS includes SLTSU DB which has stored thereon shipping data utilized and periodically updated by the SLTSU. The SLTSU enables DPS **100** to concurrently track multiple different shipment groups in multiple different geographic locations, update a shipping history of each of the multiple different shipment groups during a life cycle of each shipment, and store the update within the storage/SLTSU DB. Additionally, DPS **100** aggregates, associates, and/or correlates detected activities, location, and triggered responses in a learning module that facilitates future handling of similar detected events that can occur.

According to one aspect a shipment monitoring and security system is provided. The SMSS includes at least one computing device that is communicatively coupled to at least one network. The computing device can be similarly configured to perform similar operations as DPS **100.** Specifically, the computing device includes at least one communication module that supports information transfer over the at least one network and which receives a plurality of location signals, each location signal associated with a respective shipment-related entity among a plurality of geographically co-located, shipment-related entities that collectively form a shipment group that is tracked during completion of a shipment. Further, the computing device is configured to generate, based in part on the geographic coordinates of the received location signals, a shipment tracking user interface (UI) on which is displayed a current location of each of shipment-related entities via visual affordances that are presented at a spatial alignment relative to each other and to a geographic location coordinates. Further, the computing device is configured to detect an occurrence of an anomaly comprising one or more of (i) loss of reception of the location signals from one or more of the shipment-related entities, (ii) unscheduled changes in a spatial relationship of the shipment-related entities or corresponding visual affordances on the STUI, (iii) an unscheduled change in a directional movement of the visual affordances associated with a single shipment group relative to each other, and (iv) a movement of shipment dot from pick-up location before being co-located and grouped with operator dot, indicative of an unauthorized taking of the shipment.

According to one embodiment, the SMSS includes a plurality of location tracking mechanisms associated with each of a shipment, a shipment container, a user equipment of an operator, and a shipping vessel/vehicle. The plurality of location tracking mechanisms enable detection of a location coordinate and transmission via an intermediary tracking system of location coordinate data to the computing device via one or more communication networks to which the computing device is communicatively coupled.

According to one embodiment, a method includes a DPS monitoring a relative location of an operator to a shipment via one or more sensor signals received for shipment-related entities of a shipment group. The method includes detecting a separation of at least one of (i) an operator signal from a trailer/tractor signal, (ii) a shipment signal from the trailer/tractor signal; and (iii) the operator signal from the shipment signal. The method further includes, in response to the separation being greater than a pre-established, acceptable separation distance, generating and issuing a notification that informs a recipient of an occurrence of the detected separation being greater than the pre-established acceptable separation distance.

According to one embodiment, the method includes, in response to the separation being a separation of at least one of (i) the operator signal from the tailor/tractor signal or (ii) the operator signal from the shipment signal during a period when the separation is not scheduled to occur: identifying the separation as correlated to an unattended or abandoned vehicle scenario in which the operator has left the tractor-trailer at a location that is not within an expected safe zone of operator separation; and triggering a notification of the unattended vehicle scenario to at least one interested party.

According to another embodiment, the method includes determining, from analyzing a change in geographic location of a received location signal over time, a velocity of operator movement away from the shipment, relative to a previous co-location coordinate. The method further incudes determining, based on the velocity of operator movement away from the shipment, that the operator is in another vehicle that is moving away from the location of the shipment, and notifying at least one of the operator, a shipper, and security personnel that the operator is deviating from an acceptable shipping plan relative to the shipment and may be abandoning the shipment prior to completion of delivery.

Additionally, the method includes: retrieving, for the identified shipment, shipping details related to a destination, preferred or recommended routes, and projected schedule of shipment movement, including expected stops, for the recommended shipping route; forwarding the shipment data to the operator device; and monitoring for an unscheduled separation event. According to one embodiment, the separation event involves one or more of the received location signals and mapped visual affordances that are expected to remain co-located in a same geo-coordinate location moving away from other visual affordances in the geo-coordinate location. According to one or more embodiments, the unscheduled separation event can include at least one of: (i) the tractor/trailer moving away from the shipment; (ii) the shipment moving away from the trailer or vice-versa, while not located within an intended pick-up or drop-off location for that shipment; and (iii) the operator moving away from the shipment or the tractor/trailer, beyond an acceptable separation distance.

Referring now to **FIG. 10****,** there is illustrated an example user communication device, which is presented as mobile communication device (MDC) **1000.** MCD **100** is an operator device and can interchangeably be described as such. Specifically, **FIG. 10** depicts a bot a 3-dimensional image as well as a block diagram representation of the component makeup of a mobile communication device (MCD). MCD **100** operates within a wireless communication network and serves as the electronic device within which several of the operator-associated features of the disclosure can be implemented. According to the general illustration, MCD **1000** is a communication device that is designed to communicate with other devices via one of a wireless communication network, which may be included within data communication network **210 (****FIG. 2****).** MCD **1000** can be one of a host of different types of devices, including but not limited to, a mobile cellular phone or smart-phone, a laptop, a net-book, an ultra-book, and/or a tablet (e.g., an iPAD^{®}), or other computing device with access to wireless connectivity. The utilized devices includes the necessary hardware and software to enable wireless-enabled communication between MCD **1000** and a network via which information and/or data and voice communication required to implement the various features described herein to facilitate security of shipments via the general location signal communication environment **200** and execution of SLTSU **122.**

Referring now to the specific component makeup and the associated functionality of the presented components, MCD **1000** comprises processor **1010,** which connects via a plurality of interconnects (illustrated by the bi-directional arrows) to a plurality of other functional components of MCD **1000.** Processor **1010** can be an integrated circuit that includes one or more programmable microprocessors and a digital signal processor (DSP). Processor **1010** controls the communication, program code execution, power mode control, time synchronization, and other functions and/or operations of MCD **1000.** These functions and/or operations thus include, but are not limited to, application data processing and signal processing.

Connected to processor **1010** is storage **1015,** memory **1020,** input/output (I/O) devices and communication mechanisms **1055.** Memory **1008** can include volatile memory and/or non-volatile memory. During device operation, one or more executable applications can be stored within memory **1020** for execution by processor **1010.** For example, memory **1020** is illustrated containing local SLTSU App **1022,** which is a downloadable app or utility that executes on MCD **1000.** SLTSU App **1022** includes shipment tracking user interface (STUI) **1024** and biometric verification module **1026,** which is utilized to verify operator to access certain secure functions of MCD **1000.** As an example, a voice or fingerprint confirmation may be required before allowing a carrier/driver to pick up a high value shipment, so that only a specific pre-authorized carrier can perform the transportation of that shipment. Thus, for example, a US Department of Defence shipment will be released only to a US Department of Defence cleared carrier.

Memory **1020** further includes shipment compliance tracking utility **1028,** which can provide access to available maps and which utilizes a GPS sensor or other location detection sensor or function of MCD to report an exact location of MCD **1000** back to CSIST server (DPS) **100B.** Within shipment compliance tracking utility **1028** is DOTS tracking utility (or SLTSU) **1030,** which is a local operator device version of and performs similar functions as SLTSU **122 (****FIG. 1****).** Also included in shipment compliance tracking utility **1028** is compliance module **1032,** which provides the compliance monitoring and response features presented in the description of **FIGs. 3A-3B****.** The two 3D views of MCD **1000** presents example compliance user interface **1005** with a dot tracker feature/section **1006** for tracking the onboard shipment group. In one embodiment, selection of that dot tracker feature **1006** from compliance user interface **1005** triggers the opening of second user interface **1007,** which provides DOTS tracker UI with location dots for each shipment-related entity positioned relative to each other within a geographic map. In normal operation, the operator has possession of MCD **1000** and either the operator and/or MCD are typically within close proximity to the operator's equipment on which a shipment has been loaded. In one or more embodiments, additional tracking features are provided within the equipment and or the shipment that allow for CSIST (data aggregation) framework **200** to identify, in real time, when the carrier and/or MCD **1000** moves out of an acceptable range away from the shipment or equipment.

Memory **1020** also includes shipment data and confirmation utility **1034,** jamming detection module **1036,** and un-authorized operator detection module **1038.** The functionality associated with and/or usage of each of the software modules will become evident by the descriptions provided herein. It is appreciated that the various software modules can be independent modules that communicate with each other via processor execution of respective program code.

Referring again to the figure, storage **1015** can be any type of available storage device capable of storing one or more application software, firmware, and data. It is further appreciated that in one or more alternate embodiments, the device storage can actually be or can include remote storage, such as a cloud storage, and not necessarily be fully integrated within the device itself. As provided, storage **1015** contains a local version of SLTSU DB **1018** that can include some of the operator login credential and biometric information to allow for local processing of the operator's login to a CSIST framework, in one or more embodiments. Storage can also include a database of device settings associated with the particular subscriber.

MCD **1000** also comprises a plurality of input/output (I/O) devices **1040.** I/O devices **1040** include, as input devices, camera **1042,** microphone **1044,** touch screen and/or touch pad and/or keypad **1046,** and biometric sensor **1052,** and, as output devices, display **1048** and speaker **1050,** and others. MCD **1000** can also include a subscriber identification module (SIM) or other similar feature that provides unique identification information of the carrier that owns or utilizes MCD **1000.** In order to allow MCD **1000** to synchronize operations and/or provide time data, MCD **1000** also includes system clock (not shown).

According to one aspect of the disclosure and as illustrated by **FIG. 10****,** MCD **1000** supports at least one and potentially many forms of wireless, over-the-air communication, which allows MCD **1000** to transmit and receive communication, including location signals, with at least one second device and/or an externally located network. To support wireless communication, MCD **1000** includes one or more of the following communication components: wireless network communication module **1060** (which can include a transceiver with connected antenna, both not expressly provided), near field communication (NFC) transceiver module **1062,** wireless fidelity (WiFi) module **1064,** and Bluetooth^{®} transceiver **1066.** It is appreciated that MCD **1000** can also include components for wired communication, such as modem and Ethernet modules (not shown). Collectively, these wireless and wired components provide a communication means or mechanism **1055** by which MCD **1000** can communicate with other devices and networks. To enable location-based services within/on the device, MCD **1000** also includes a location service module, such as a GPS module, without limitation.

MCD **1000** establishes communication with the at least one other device via over-the-air signal transmission, following the exchange of specific authentication and/or access credentials. The communication between MCD **1000** and the second devices can be via near field communication, Bluetooth, infrared (IR) transmission, and others, without limitation. As a wireless device, MCD **1000** can transmit data over a wireless network (e.g., a Wi-Fi network, cellular network, Bluetooth^{®} network (including Bluetooth^{®} low energy (BLE) networks), a wireless ad hoc network (WANET), or personal area network (PAN)). In one embodiment, MCD **1000** may be further equipped with an infrared (IR) device (not pictured) for communicating with other devices using an IR connection. In another embodiment, MCD **1000** may include a short-range wireless device, including, but not limited to, a near field communication (NFC) device. In still another embodiment, MCD **1000** may communicate with one or more other device(s) using a wired or wireless USB connection.

According to an implementation embodiment, MCD **1000** includes a display providing a user interface and a memory having stored thereon a shipment location tracking utility (SLTU). MCD **1000** also includes a processor communicatively connected to the display and the memory and which executes the Dots tracking utility **1020** to enable the user communication device to perform the method processes of **FIGs. 7****,** **8A-8B****,** and **9** with modifications to the location signal receiving and tracking processes to include a remote aggregator, in one embodiment, and direct connections from the MCD **100** in other embodiments. Further, with the MDC-based implementation of methods **700, 800, 850, 900,** additional modifications are provided to enable the generated notifications to be immediately displayed on the display of MCD **1000.** According to one aspect of the disclosure, the modification to the notification is made because the operator becomes the principal consumer and/or recipient of the notifications, as the operator owns the MCD, is physically closest to the shipment for the majority of the time, and is therefore able to take affirmative steps to protect the shipment. Thus, the notifications are either locally generated and displayed on MCD **1000,** or the notifications are received from the DPS **100,** CSIST server **100B,** or data aggregator **320** and displayed on MCD **1000.**

Similar to the execution of STLSU **122** by processor **105** of DPS **100,** processor **1010** od MCD **1000** executes local STLSU or Dots utility **1030,** which enables MCD **1000** to track a series of dots corresponding to a shipment assigned to the operator/carrier for transporting to one or more respective destinations. MCD **1000** receives a location signal for each of the shipment and a tractor trailer. MCD **1000** co-locates and group the dots (each representing unique tracking affordances) of the shipment (a first tracking affordance) with that of the shipping vessel (operator equipment or tractor-trailer) (a second tracking affordance) and the MCD (a third tracking affordance). Dots of the MCD **1000** thus corresponds to the authorized operator for the shipment. In one embodiment, the location signals and other data related to the shipment are received from data aggregator **(320,** **FIG. 3****),** such as CSIST server **100B.** In at least one embodiment, the data for all other entities of the shipment group is locally received and aggregated by processor execution of Dots utility **1030.**

MCD **1000** presents, within the user interface, the group of dots representing a relative co-location of each of the cargo and the tractor trailer. MCD **1000** automatically updates a relative location of each dot within the group to correlate to a current real-time location. MCD **100** detects an unscheduled separation of the dots and compares a separation distance to a pre-set threshold maximum separation distance. MCD **1000** determines when a detected separation distance of one of the tracking affordances is greater than the pre-set threshold maximum separation distance, and in response to the detected separation distance being greater than the pre-set threshold maximum separation distance, MCD **1000** generates and issues a notification signal to alert at least one of the operator and a remote monitoring device that an anomaly has been detected with the movement of the shipment that can affect a security of the shipment. It is appreciated that the tracking of the shipment and updating of the co-located dots continues until that shipment is delivered or another terminal even is received. For example, in one embodiment, the operator removes or deletes the shipment group from the STUI. In another embodiment, the assigning and removal is performed by a remote system (e.g., CSIST servers **100B)** that downloads updates to the operator's copy of the SLTSU App with new shipment assignments and removes the completed shipment assignments once confirmation of the delivery is received at the remote system computers.

MCD **1000** is also configured to track an assigned future shipment. MCD **1000** receives a shipment assignment providing information about a shipment that is to be picked up and transported by the operator from a given shipment pick-up point to a shipment delivery point and provide a unique tracking affordance corresponding to the shipment. MCD **1000** maps the unique tracking affordance to a current location of the shipment on a co-location map presented on a tracking UI. MCD **1000** also receives movement data associated with the unique tracking affordance and updates a mapping on a displayed co-location map. MCD **1000** monitors for anomalies in a current location of the shipment prior to the operator arriving at the origination point to receive the shipment, and in response to detecting an anomaly in the current location, MCD **1000** generates and issues to the user interface a notification about the anomaly. Specifically, in one embodiment in response to detecting the anomaly, MCD **1000** transmits a notification to a monitoring server about the disappearance to trigger tracking of a location of the shipment relative to known operators to identify whether one of the known operators has mistakenly taken the shipment. In one embodiment, the notification is communicated to the carrier or the shipper directly. In another embodiment, the notification can be transmitted to a port controller when the shipment is being held at a shipping port for pickup.

Also, as one aspect, the notification of third parties can be triggered from the remote server, which receives the initial notification from MCD **1000.** MCD **1000** thus serves as a localized security sensor that identifies anomalies affecting only those shipments assigned to MCD **1000,** and MCD **1000** immediately communicates the anomaly to the remote system for responsive action.

According to one embodiment, detection of the anomaly can involve the shipment's unique tracking affordance moving away from the origination point at a velocity that indicates the shipment has been picked up by another moving vessel. With this embodiment, MCD **1000** triggers tracking of a location of the shipment relative to known operators to identify whether one of the known operators has mistakenly taken the shipment. The tracking of the shipment can be performed by the remote system with a wider range of sensors and tracking capabilities and communication access to the MCDs of other operators and to law enforcement.

According to another embodiment, MCD **1000** detects an anomaly that involves a disappearance of a plurality of the unique tracking affordances, where the location signals are no longer detectable. In response to detecting the disappearance of the dots, MCD **1000** generates and issues an alert indicating that the shipment is likely under a jamming attack, and MCD **1000** transmits the notification with information about the disappearance to a remote monitoring server (CSIST server **100B).**

In one embodiment, MCD **1000** is a smart phone or tablet or other communication device of a driver/operator that is equipped (or programmed) with a DOTS tracking application (app). The DOTS tracking app enables MCD **1000** to be configured to track a series of dots corresponding to cargo assigned to the driver for transportation to one or more respective destinations. Multiple different methods for inputting the specific cargo's unique signal within the app can be provided. Once inputted (or downloaded), the cargo's location relative to the operator is determined and presented on the user interface of the MCD. The driver may then monitor his shipment locally on his device. Any improper movement (or other activity) of monitored dots can then be detected locally and the driver provided with a notification that enables the driver to immediately check on the status of the cargo and/or his truck. New shipment information can also be relayed to the driver ahead of pickup so the driver can be alerted if another driver mistakenly or deliberately attempts to take the truck and/or shipment from the pick-up point.

In one embodiment, the specific operator setup of the MCD **1000** and specifically the SLTSU App **1030** executing on MCD **1000** is required in order to enable the tracking of the operator and implementation of certain aspects of the shipment tracking features described herein. Similar to the implementation of SLTSU **122** on DPS (FIG. 1 and 4), the SLTSU App **1030** can provide visual tracking of multiple assigned shipments, and can also provide a selection feature that enables a zoning in on a single one of the assigned shipments to view specific details about that shipment on the device's STUI.

As a paid for application, use of the tracking features can be added on to the base communication infrastructure module as an additional service offered and/or a premium offering. Additionally, security features can be provided that includes one or more of temperature monitoring, door lock monitoring, with/without remote locking, and on-board video monitoring. These features can be provided as add-ons with an associated service costs payable when added to a base service, such as coordinating assignment of shipments to operators. The operator may elect to have a full version of the App **1030** installed or a location tracking version only. With the full version, additional functionality can be provided at the MCD **1000,** such as the localized tracking of an assigned shipment, etc.

As further described herein, implementation of the functional features of the disclosure described herein can involve use of a combination of hardware, firmware, as well as several software-level constructs (e.g., program code and/or program instructions and/or pseudo-code) that execute to provide a series of methods that present the different features and functions of the disclosure.

In the above description, exemplary embodiments in which various aspects of the disclosure may be practiced are described in sufficient detail to enable those skilled in the art to practice the invention. It is to be understood that other embodiments may be utilized and that logical, architectural, programmatic, mechanical, electrical and other changes may be made without departing from the scope of the present disclosure. The above description is an extended summary and therefore, should not to be taken in a limiting sense, and the scope of the present disclosure will be defined by appended claims.

While the disclosure has been described with reference to exemplary embodiments, it will be understood by those skilled in the art that various changes may be made and equivalents may be substituted for elements thereof without departing from the scope of the disclosure. In addition, many modifications may be made to adapt a particular system, device or component thereof to the teachings of the disclosure without departing from the essential scope thereof. Therefore, it is intended that the invention not be limited to the particular embodiments disclosed for carrying out the disclosure, but that the disclosure will include all embodiments falling within the scope of any appended claims. Moreover, the use of the terms first, second, etc. do not denote any order or importance, but rather the terms first, second, etc. are used to distinguish one element from another.

One or more of the embodiments of the disclosure described can be implementable, at least in part, using a software-controlled programmable processing device, such as a microprocessor, digital signal processor or other processing device, data processing apparatus or system. Thus, it is appreciated that a computer program for configuring a programmable device, apparatus or system to implement the foregoing described methods is envisaged as an aspect of the present disclosure. The computer program may be embodied as source code or undergo compilation for implementation on a processing device, apparatus, or system. Suitably, the computer program is stored on a carrier device in machine or device readable form, for example in solid-state memory, magnetic memory such as disk or tape, optically or magneto-optically readable memory such as compact disk or digital versatile disk, flash memory, etc. The processing device, apparatus or system utilizes the program or a part thereof to configure the processing device, apparatus, or system for operation.

While the disclosure has been described with reference to exemplary embodiments, it will be understood by those skilled in the art that various changes may be made and equivalents may be substituted for elements thereof without departing from the scope of the disclosure. In addition, many modifications may be made to adapt a particular system, device or component thereof to the teachings of the disclosure without departing from the essential scope thereof. Therefore, it is intended that the disclosure not be limited to the particular embodiments disclosed for carrying out this disclosure, but that the disclosure will include all embodiments falling within the scope of the appended claims. Moreover, the use of the terms first, second, etc. do not denote any order or importance, but rather the terms first, second, etc. are used to distinguish one element from another.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The description of the present disclosure has been presented for purposes of illustration and description, but is not intended to be exhaustive or limited to the disclosure in the form disclosed. Many modifications and variations will be apparent to those of ordinary skill in the art without departing from the scope of the disclosure. The described embodiments were chosen and described in order to best explain the principles of the disclosure and the practical application, and to enable others of ordinary skill in the art to understand the disclosure for various embodiments with various modifications as are suited to the particular use contemplated.

## Claims

1. A data processing system comprising:
a memory having stored thereon a shipment location tracking and security utility (SLTSU);
a display device that visually presents at least one graphical user interface (UI) generated by the SLTSU;
at least one network interface device (NID) that enables the data processing system to receive and transmit information via one or more communication networks;
at least one processor coupled to the memory, the display device, and the at least one NID, and which executes the SLTSU to configure the data processing system to:
receive, via the at least one NID, a plurality of location tracking signals indicating a location of multiple shipment-related entities that are being tracked concurrently as a shipment group;
associate the location tracking signals as the shipment group and assigning a unique shipment tracking identifier (STID) to the shipment group to track movement of the location tracking signals relative to each other;
present, on the display device, the shipment group as a plurality of co-located visual affordances on a shipment tracking user interface (UI), wherein each received location tracking signal is represented by one visual affordance from among the plurality of co-located visual affordances;
present, on the display device within the shipment tracking UI, movement of the plurality of location tracking signals associated with the shipment group;
monitor, by analyzing the movement of the plurality of location tracking signals of the shipment group, to detect any unscheduled deviations in at least one of an expected co-location and an expected geo-location of received updates to the location tracking signals within the shipment group; and
in response to detecting an unscheduled deviation: identify a specific type of the unscheduled deviation; and trigger a series of responsive actions based on the specific type of the unscheduled deviation, the responsive actions comprising presenting at least one of an audible and a visible alert notification.

2. The data processing system of claim 1, wherein the SLTSU further enables the data processing system to:
generate and display, on the display device, the shipment tracking user interface (UI) displaying each of a plurality of shipment groups being simultaneously tracked; and
indicate, within the shipment tracking UI, when an anomaly has been detected in one of the plurality of shipment groups.

3. The data processing system of claim 1, wherein presenting the shipment group as a plurality of co-located visual affordances on the shipment tracking UI comprises the SLTSU further configuring the data processing system to:
present each location tracking signal within the shipment group as a separate visual affordance co-located with other visual affordances corresponding to a respective location tracking signal of a shipment-related entity within the shipment group;
co-locate and present the visual affordances representing each of the received location tracking signals with a spatial alignment showing a relative separation distance of the shipment-related entities;
periodically receive updated location tracking signals from one or more of the shipment-related entities;
update the presentation of the plurality of co-located visual affordances on the UI based on the updated location tracking signals.

4. The data processing system of claim 3, wherein the SLTSU configures the data processing system to visually present each shipment-related entity within a shipment group as visually distinct dots on the shipment tracking UI, using one or more of (i) a different dot type and (ii) different characteristics assigned to a same dot type.

5. The data processing system of claim 1, wherein the SLTSU configures the data processing system to perform the functions of:
in response to detecting a selection of the unique STID or visual affordance of a specific shipment group being displayed within the shipment tracking UI, generate and display, on the display device, a second shipment tracking UI that provides detailed information about a corresponding shipment and a last recorded location of each shipment-related entity of the shipment group relative to a location of each other shipment-related entity within the shipment group and in relation to a geographic or location coordinate of the shipment-related entities and shipping route.

6. The data processing system of claim 1, wherein:
the plurality of co-located visual affordances comprises a plurality of co-located dots, each dot representing a location of a shipment-related entity as determined from a respective one of the received location tracking signals; and
wherein to monitor for any unscheduled deviations, the STLSU configures the data processing system to:
detect an occurrence of an anomaly from among a group comprising (i) loss of reception of the location tracking signals from one or more of the shipment-related entities, (ii) unscheduled changes in a spatial relationship of the shipment-related entities or corresponding visual affordances on the shipment tracking UI, and (iii) an unscheduled movement of a shipment location tracking signal from a shipment pick-up location before being co-located and grouped with an operator location tracking signal, indicative of an unauthorized taking of shipment; and
in response to detecting an anomaly that includes an unscheduled separation of the co-located dots from each other before a shipment delivery at an intended destination:
determine if there is a valid reason for the unscheduled separation by evaluating historical data and received data about the shipment-related entities, a route, geographic location at which the unscheduled separation occurs, and received environmental conditions; and
in response to not identifying a valid reason for the unscheduled separation: flag the shipment for enhanced monitoring; trigger security measures to alert relevant parties of the occurrence of the unscheduled separation of the co-located dots; and create and store a record of the occurrence of the anomaly.

7. The data processing system of claim 6, wherein the STLSU configures the data processing system to:
in response to the deviation being a separation of the shipment-related entities from each other occurring at an unscheduled time prior to the shipment reaching a shipment delivery destination;
evaluate, using historical data and geographical mapping data, a geographic location at which the separation occurs;
place the shipment in an enhanced watch/monitoring state;
trigger a performance of one or more security features that informs at a least one of an operator and a shipper of the separation; and
create and storing a record of the separation event and responsive actions taken; and in response to the separation occurring at the shipment delivery destination:
de-couple the location tracking signals within the shipment group;
update a shipment tracking system to indicate that the shipment has been delivered; and
update the shipment tracking UI to remove the plurality of co-located visual affordances for tracking the shipment group.

8. The data processing system of claim 7, wherein the STLSU configures the data processing system to:
check whether a de-escalation signal is received from a trusted party providing a verification of a safety of the shipment prior to expiration of a pre-established window of time.
in response to receiving the de-escalation signal prior to expiration of the pre-established window of time, remove the shipment from the enhanced watch/monitoring state; and
in response to one of (i) all of the dots simultaneously disappearing for more than the pre-established window of time and (ii) not receiving the de-escalation signal prior to expiration of the pre-established window of time when only a subset of the location tracking signals disappear from the shipment tracking UI:
place the shipment in an elevated danger state; and
trigger a higher level alarm to initiate a series of responsive operations and actions.

9. The data processing system of claim 6, wherein the unscheduled deviation comprises a loss off a location tracking signal of at least one shipment entity associated with the shipment group, and the STLSU configures the data processing system to:
detect a complete loss of at least one location tracking signal from a corresponding one or more of the shipment-related entities;
in response to the detected complete loss, modify a presentation within the shipment tracking UI of the visual affordance corresponding with the location tracking signal for that shipment-related entity;
determine, based in part on characteristics associated with the loss of the at least one signal, whether the loss is a result of a jamming attack at the location of the shipment;
in response to determining that the resulting loss is a result of a jamming attack:
generate and issue a specific notification that identifies detection of the jamming attack; and
initiate one or more actions to counter the jamming attack and protect one or more of the shipment-related entities from bad act; and
in response to the signal loss being a partial loss of received location tracking signals affecting only a subset of the shipment-related entities within the shipment group:
trigger a low level alarm event;
set a timer for a pre-established time window to track an amount of time that elapses following detection of the partial loss of signal;
monitor whether partial loss of received location tracking signal is resolved before expiration of the pre-established time window;
in response to the partial loss being resolved within the pre-established time window, record the event, including a geographic location of the shipment-related entity when the partial loss occurred; and
in response to the partial loss not being resolved within the pre-established time window, generate real-time alerts and notifications of a detected problem with a corresponding location tracking mechanism that may indicate tampering and a potential theft of an associated shipment-related entity.

10. The data processing system of claim 1, wherein to perform the series of responsive actions based on the specific type of deviation identified, the SLTSU configures the data processing system to further perform at least one of:
high-light, on the shipment tracking UI, a corresponding visual affordance of the unique ID of the shipment group for which the deviation is detected;
output at least one of an on-screen visual notification and an audible notification to alert a monitoring personnel about the detected deviation; and
communicate the notification to a remote communication device of at least one of an operator and a shipper associated with the shipment to provide real-time notification of the deviation.

11. The data processing system of claim 1, wherein the SLTSU configures the data processing system to:
identify an intended operator and shipping vessel assigned to a future shipment awaiting pickup by the intended operator, the intended operator having an operator ID and a communication device that provides a unique device location signal that is associated with the operator ID, the shipment also having a unique shipment location tracking signal;
associate the operator ID to the future shipment;
monitor a geo-coordinate location of the future shipment prior to pick-up by the intended operator;
identify an anomaly from among: (i) detecting a change in the geo-coordinate location of the future shipment by more than a first threshold distance prior to the unique shipment location tracking signal being co-located with the unique device location signal; and (ii) detecting that a second operator device signal, different from the unique device location signal, is co-located with and begins to move in unison with the unique shipment location tracking signal, where the second operator device signal is not associated with the intended operator or a second operator that has been assigned to transport the shipment;
in response to identifying the anomaly, trigger a series of responsive actions designed to prevent or stop an un-authorized operator from taking the shipment; and
in response to a received signal indicating the intended operator has picked-up the shipment, link and co-locate the unique device location signal and unique shipment location tracking signal to create and track a new shipment group.

12. A method performed by a processor of a data processing system comprising:
receiving, via a network interface device of the data processing system, a plurality of location tracking signals, each location tracking signal indicating a location of multiple shipment-related entities that are being tracked concurrently as a shipment group;
associating the location tracking signals as the shipment group and assigning a unique shipment tracking identifier (STID) to the shipment group to track movement of the location tracking signals relative to each other;
presenting the shipment group as a plurality of co-located visual affordances on a display device of the data processing system presenting a shipment tracking user interface (UI), wherein each received location tracking signal is represented by one visual affordance from among the plurality of co-located visual affordances;
presenting, on the display device within the shipment tracking UI, movement of the plurality of location tracking signals associated with the shipment group;
monitoring, by analyzing the movement of the plurality of location tracking signals of the shipment group, to detect any unscheduled deviations in at least one of an expected co-location and an expected geo-location of received updates to the location tracking signals within the shipment group; and
in response to detecting an unscheduled deviation: identifying a specific type of the unscheduled deviation; and triggering a series of responsive actions based on the specific type of the unscheduled deviation, the responsive actions comprising presenting at least one of an audible and a visible alert notification.

13. The method of claim 12, further comprising:
generating and displaying, on the display device, the shipment tracking user interface (UI) that displays respective locations of each of a plurality of shipment groups being simultaneously tracked; and
indicating, within the shipment tracking UI on the display device, when an anomaly has been detected in one of the plurality of shipment groups.

14. The method claim 12, wherein presenting the shipment group as a plurality of co-located visual affordances on the shipment tracking UI comprises:
presenting, on the display device, each location tracking signal within the shipment group as a separate visual affordance co-located with other visual affordances each corresponding to the location tracking signal of a shipment-related entity within the shipment group; co-locating and presenting the visual affordances representing each of the received location tracking signals with a spatial alignment showing a separation distance of the shipment-related entities;
periodically receiving updated location tracking signals from one or more of the shipment-related entities;
updating the presentation of the plurality of co-located visual affordances on the UI based on the updated location tracking signals
wherein the plurality of co-located visual affordances comprise a plurality of co-located dots;
providing a geographic mapping of the plurality of co-located dots on the UI; comparing a present location of the co-located dots to at least one of an intended shipment delivery destination and a current expected location of the shipment;
identifying, based on the present location, if there has been a route deviation by an operator that is outside of an acceptable range of deviation from a pre-scheduled route; and
generating and transmitting at least one notification signal to a second device to correct the deviation.

15. The method of claim 12, wherein:
the plurality of co-located visual affordances comprises a plurality of co-located dots, each dot representing a location of a shipment-related entity as determined from a respective one of the received location tracking signals; and
the method further comprises:
detecting an occurrence of an anomaly from among a group comprising (i) loss of reception of the location tracking signals from one or more of the shipment-related entities, (ii) unscheduled changes in a spatial relationship of the shipment-related entities or corresponding visual affordances on the shipment tracking UI, and (iii) an unscheduled movement of a shipment location tracking signal from a shipment pick-up location before being co-located and grouped with an operator location tracking signal, indicative of an unauthorized taking of shipment; and
in response to detecting an anomaly that includes an unscheduled separation of the co-located dots from each other before a shipment delivery at an intended destination:
determining if there is a valid reason for the unscheduled separation by evaluating historical data and received data about the shipment-related entities, a route, geographic location at which the unscheduled separation occurs, and
received environmental conditions; and
in response to not identifying a valid reason for the unscheduled separation: flagging the shipment for enhanced monitoring; triggering security measures to audibly or visibly alert relevant parties of the occurrence of the anomaly; and creating and storing a record of the occurrence of the anomaly.

## Patentansprüche

1. Datenverarbeitungssystem umfassend:
Einen Speicher, auf dem eine Sendungsverfolgung und Sicherheitssoftware für Lieferungen (SLTSU) gespeichert ist;
ein Anzeigegerät, das visuell mindestens eine graphische Benutzeroberfläche (UI) präsentiert, die von der SLTSU erzeugt wird;
mindestens ein Netzwerkschnittstellengerät (NID), das das Datenverarbeitungssystem in die Lage versetzt, Informationen über ein oder mehrere Kommunikationsnetzwerke zu empfangen oder zu übermitteln;
mindestens einen Prozessor, der mit dem Speicher, dem Anzeigegerät und dem mindestens einen NID gekoppelt ist, und der die SLTSU ausführt, um das Datenverarbeitungssystem für Folgendes zu konfigurieren:
Empfangen, über das mindestens eine NID, einer Vielzahl von Standortverfolgungssignalen, die einen Standort mehrerer sendungsbezogener Einheiten angeben, die gleichzeitig als eine Sendungsgruppe verfolgt werden;
Verknüpfen der Standortverfolgungssignale als die Sendungsgruppe und Zuweisen einer eindeutigen Sendungsverfolgungskennung (STID) an die Sendungsgruppe, um die Bewegung der Standortverfolgungssignale im Verhältnis zueinander zu verfolgen;
Darstellen der Sendungsgruppe auf dem Anzeigegerät als eine Vielzahl von nebeneinander angeordneten visuellen Affordanzen auf einer Sendungsverfolgungs-Benutzeroberfläche (UI), wobei jedes empfangene Standortverfolgungssignal als eine visuelle Affordanz aus der Vielzahl von nebeneinander angeordneten visuellen Affordanzen präsentiert wird;
Darstellen, auf dem Anzeigegerät innerhalb der Sendungsverfolgungs-Ul, einer Bewegung der Vielzahl von Standortverfolgungssignalen, die mit der Sendungsgruppe verbunden sind;
Überwachen, durch Analysieren der Bewegung der Vielzahl von Standortverfolgungssignalen der Sendungsgruppe, um jede ungeplante Abweichung in mindestens einem eines erwarteten nebeneinander angeordneten Standorts und einer erwarteten Geolokalisierung von empfangenen Aktualisierungen der Standortverfolgungssignale innerhalb der Sendungsgruppe zu erfassen; und
als Reaktion auf das Erfassen einer ungeplanten Abweichung: Identifizieren eines spezifischen Typs der ungeplanten Abweichung; und Auslösen einer Reihe von reaktiven Handlungen, basierend auf dem spezifischen Typ der ungeplanten Abweichung, die reaktiven Handlungen umfassen das Darstellen mindestens entweder einer akustischen oder einer optischen Warnmeldung.

2. Datenverarbeitungssystem nach Anspruch 1, wobei die SLTSU ferner das Datenverarbeitungssystem zu Folgendem in die Lage versetzt:
Erzeugen und Anzeigen der Sendungsverfolgungs-Benutzeroberfläche (UI) auf dem Anzeigegerät, das jede einer Vielzahl von gleichzeitig nachverfolgten Sendungsgruppen anzeigt; und
Anzeigen, innerhalb der Sendungsverfolgungs-Ul, wenn eine Anomalie in einer der Vielzahl von Sendungsgruppen erkannt wurde.

3. Datenverarbeitungssystem nach Anspruch 1, wobei das Darstellen der Sendungsgruppe als eine Vielzahl von nebeneinander angeordneten visuellen Affordanzen auf der Sendungsverfolgungs-Ul umfasst, dass die SLTSU ferner das Datenverarbeitungssystem zu Folgendem konfiguriert:
Darstellen jedes Standortverfolgungssignals innerhalb der Sendungsgruppe als eine separate visuelle Affordanz, die neben anderen visuellen Affordanzen angeordnet ist, die einem zugehörigen Standortverfolgungssignal einer sendungsbezogenen Einheit innerhalb der Sendungsgruppe entspricht;
Nebeneinander Anordnen und Darstellen der visuellen Affordanzen, die jedes der empfangenen Standortverfolgungssignale mit einer räumlichen Ausrichtung empfangen, die einen relativen Trennungsabstand der sendungsbezogenen Einheiten zeigen;
regelmäßiges Empfangen aktualisierter Standortverfolgungssignale von einer oder mehreren der sendungsbezogenen Einheiten;
Aktualisieren der Darstellung der Vielzahl von nebeneinander angeordneten visuellen Affordanzen auf der Ul, basierend auf den aktualisierten Standortverfolgungssignalen.

4. Datenverarbeitungssystem nach Anspruch 3, wobei die SLTSU das Datenverarbeitungssystem konfiguriert, jede sendungsbezogene Einheit visuell innerhalb einer Sendungsgruppe als visuell unterschiedliche Punkte auf der Sendungsverfolgungs-Ul, unter Verwendung einer oder mehrerer aus (i) einem verschiedenen Punkttyp und (ii) verschiedenen Eigenschaften, die einem gleichen Punkttyp zugewiesen sind, darzustellen.

5. Datenverarbeitungssystem nach Anspruch 1, wobei die SLTSU das Datenverarbeitungssystem konfiguriert, folgende Funktionen auszuführen:
Als Reaktion auf das Erfassen einer Auswahl der eindeutigen STID oder visuellen Affordanz einer spezifischen Sendungsgruppe, die innerhalb einer Sendungsverfolgungs-Ul angezeigt werden, Erzeugen und Anzeigen, auf dem Anzeigegerät, einer zweiten Sendungsverfolgungs-Ul, die detaillierte Informationen zu einer entsprechenden Sendung und einem letzten aufgezeichneten Standort jeder sendungsbezogenen Einheit der Sendungsgruppe, im Verhältnis zu einem Standort jeder anderen sendungsbezogenen Einheit innerhalb der Sendungsgruppe und in Bezug auf eine geographische oder Standortkoordinate der sendungsbezogenen Einheiten und des Versandwegs bereitstellt.

6. Datenverarbeitungssystem nach Anspruch 1, wobei:
Die Vielzahl von nebeneinander angeordneten Affordanzen eine Vielzahl von nebeneinander angeordneten Punkten umfasst, jeder Punkt stellt dabei einen Standort einer sendungsbezogenen Einheit dar, der aus einem entsprechenden der empfangenen Standortverfolgungssignale bestimmt wird; und
wobei die STLSU, um jede unplanmäßige Abweichung zu überwachen, das Datenverarbeitungssystem für Folgendes konfiguriert:
Erfassen eines Auftretens einer Anomalie aus einer Gruppe umfassend (i) den Verlust des Empfangs der Standortverfolgungssignale von einer oder mehreren sendungsbezogenen Einheiten, (ii) unplanmäßige Änderungen in einer räumlichen Beziehung der sendungsbezogenen Einheiten oder entsprechender visueller Affordanzen in der Sendungsverfolgungs-Ul, und (iii) einer unplanmäßigen Bewegung eines SendungsStandortverfolgungssignals von einem Sendungsabholungsstandort bevor es neben einem Fahrerstandortverfolgungssignal angeordnet und gruppiert wird, als Hinweis auf eine nicht autorisierte Übernahme einer Sendung; und
als Reaktion auf ein Erfassen einer Anomalie, die eine unplanmäßige Trennung der nebeneinander angeordneten Punkte voneinander vor einer Sendungslieferung an einen vorgesehenen Bestimmungsort einschließt:
Bestimmen, ob es einen stichhaltigen Grund für die unplanmäßige Trennung gibt, indem die historischen Verlaufsdaten und die zu den sendungsbezogenen Einheiten empfangenen Daten, Strecken, geographischen Standorte, an denen die unplanmäßige Trennung auftritt, und die empfangenen Umweltbedingungen bewertet werden; und
als Reaktion auf ein Nichtidentifizieren eines stichhaltigen Grundes für die unplanmäßige Trennung: Markieren der Sendung für eine erweiterte Überwachung; Auslösen von Sicherheitsmaßnahmen, um relevante Parteien auf das Auftreten der unplanmäßigen Trennung der nebeneinander angeordneten Punkte hinzuweisen; und Erstellen und Speichern einer Aufzeichnung des Auftretens der Anomalie.

7. Datenverarbeitungssystem nach Anspruch 6, wobei die STLSU das Datenverarbeitungssystem zu Folgendem konfiguriert:
Als Reaktion auf die Abweichung, die eine Trennung der sendungsbezogenen Einheiten voneinander darstellt, die zu einem unplanmäßigen Zeitpunkt auftritt, bevor die Sendung einen Bestimmungsort der Sendungslieferung erreicht;
Bewerten, unter Verwendung historischer Verlaufsdaten und geographischer Mapping-Daten, eines geographischen Standorts, an dem die Trennung auftritt;
Versetzen der Lieferung in einen erweiterten Beobachtungs-/Überwachungsstatus;
Auslösen einer Leistung einer oder mehrerer Sicherheitsmerkmale, die mindestens entweder einen Fahrer oder einen Spediteur der getrennten Einheiten informiert; und
Erstellen und Speichern einer Aufzeichnung des Trennungsereignisses und der ausgeführten Handlungen als Reaktion darauf;
und als Reaktion auf die am Bestimmungsort der Sendungslieferung auftretende Trennung:
Entkoppeln der Standortverfolgungssignale innerhalb der Sendungsgruppe;
Aktualisieren eines Sendungsverfolgungssystems, um anzuzeigen, dass die Sendung geliefert wurde; und
Aktualisieren der Sendungsverfolgungs-Ul, um die Vielzahl von nebeneinander angeordneten visuellen Affordanzen für das Verfolgen der Sendungsgruppe zu entfernen.

8. Datenverarbeitungssystem nach Anspruch 7, wobei die STLSU das Datenverarbeitungssystem zu Folgendem konfiguriert:
Prüfen, ob ein Deeskalationssignal von einer vertrauensvollen Partei empfangen wird, die eine Prüfung einer Sicherheit der Sendung vor Ablauf eines voreingestellten Zeitfensters bereitstellt;
als Reaktion auf das Empfangen des Deeskalationssignals vor Ablauf des voreingestellten Zeitfensters, Entfernen der Sendung aus dem erweiterten Beobachtungs-/Überwachungsstatus; und
als Reaktion darauf, dass entweder (i) alle Punkte gleichzeitig für länger als das voreingestellte Zeitfenster verschwinden oder (ii) das Deeskalationssignal nicht vor Ablauf des voreingestellten Zeitfensters empfangen wird, wenn nur eine Untergruppe der Standortverfolgungssignale von der Sendungsverfolgungs-Ul verschwindet:
Versetzen der Sendung in einen erhöhten Gefahrenzustand; und
Auslösen eines Alarms auf höherer Ebene, um eine Reihe von reaktiven Schritten und Handlungen zu starten.

9. Datenverarbeitungssystem nach Anspruch 6, wobei die unplanmäßige Abweichung den Verlust eines Standortverfolgungssignals mindestens einer Sendungseinheit umfasst, die mit der Sendungsgruppe verbunden ist, und wobei die STLSU das Datenverarbeitungssystem zu Folgendem konfiguriert:
Erfassen eines vollständigen Verlusts mindestens eines Standortverfolgungssignals von einem oder mehreren entsprechenden sendungsbezogenen Einheiten;
als Reaktion auf den erfassten vollständigen Verlust, Ändern einer Darstellung innerhalb der Sendungsverfolgungs-Ul der visuellen Affordanz, die der Sendungsverfolgung für diese sendungsbezogene Einheit entspricht;
Bestimmen, teilweise basierend auf Eigenschaften, die mit dem Verlust des mindestens einen Signals verbunden sind, ob der Verlust ein Ergebnis eines Jamming-Angriffs an dem Standort der Sendung ist;
als Reaktion auf das Feststellen, dass der sich ergebende Verlust das Ergebnis eines Jamming-Angriffs ist:
Erzeugen und Ausstellen einer spezifischen Benachrichtigung, die das Erkennen des Jamming-Angriffs identifiziert; und
Beginnen einer oder mehrerer Handlungen, um den Jamming-Angriff abzuwehren und eine oder mehrere der sendungsbezogenen Einheiten vor einem ungesetzlichen Akt zu schützen; und
als Reaktion auf den Signalverlust, der ein Teilverlust der empfangenen Standortverfolgungssignale ist, die nur eine Untergruppe der sendungsbezogenen Einheiten innerhalb der Sendungsgruppe betrifft:
Auslösen eines Alarmereignisses auf unterer Ebene;
Einstellen eines Timers für ein voreingestelltes Zeitfenster, um eine Zeitspanne zu verfolgen, die nach Erfassen des teilweisen Signalverlustes abläuft;
Überwachen, ob der Teilverlust des empfangenen Standortverfolgungssignals vor Ablauf des voreingestellten Zeitfensters gelöst ist;
als Reaktion darauf, dass der Teilverlust innerhalb des voreingestellten Zeitfenster gelöst ist, Aufzeichnen des Ereignisses, einschließlich eines geographischen Standorts der sendungsbezogenen Einheit, wann der Teilverlust aufgetreten ist; und
als Reaktion darauf, dass der Teilverlust nicht innerhalb des voreingestellten Zeitfensters gelöst ist, Erzeugen von Echtzeitwarnungen und -benachrichtigungen eines erfassten Problems mit einem entsprechenden Standortverfolgungsmechanismus, der eine betrügerische Änderung und einen potentiellen Diebstahl einer verbundenen sendungsbezogenen Einheit anzeigen kann.

10. Datenverarbeitungssystem nach Anspruch 1, wobei die SLTSU zur Ausführung der Reihe von reaktiven Handlungen, basierend auf dem spezifischen Typ der identifizierten Abweichung, das Datenverarbeitungssystem konfiguriert, ferner mindestens eines aus Folgendem auszuführen:
Hervorheben auf der Sendungsverfolgungs-Ul, einer entsprechenden visuellen Affordanz der eindeutigen ID der Sendungsgruppe, bei der die Abweichung erfasst wurde:
Ausgabe mindestens entweder einer visuellen Bildschirmbenachrichtigung oder einer akustischen Benachrichtigung, um Überwachungspersonal auf die erfasste Abweichung hinzuweisen; und
Übertragen der Benachrichtigung an ein Remote-Kommunikationsgerät mindestens entweder eines Fahrers oder eines Spediteurs, der mit der Sendung verbunden ist, um eine Echtzeitbenachrichtigung zu der Abweichung bereitzustellen.

11. Datenverarbeitungssystem nach Anspruch 1, wobei die SLTSU das Datenverarbeitungssystem zu Folgendem konfiguriert:
Identifizieren eines vorgesehenen Fahrers und Lieferfahrzeugs, das einer zukünftigen Sendung, die auf Abholung durch den vorgesehenen Fahrer wartet, zugeordnet ist, wobei der vorgesehene Fahrer über eine Fahrer-ID und ein Kommunikationsgerät verfügt, das ein eindeutiges Gerätestandortsignal bereitstellt, das mit der Fahrer-ID verbunden ist, wobei die Sendung ebenfalls ein eindeutiges Sendungsstandortverfolgungssignal aufweist;
Verbinden der Fahrer-ID mit der zukünftigen Sendung;
Überwachen eines Geokoordinaten-Standorts der zukünftigen Sendung vor Abholung durch den vorgesehenen Fahrer;
Identifizieren einer Anomalie aus Folgendem: (i) Erfassen einer Änderung des Geokoordinaten-Standorts der zukünftigen Sendung um mehr als einen ersten Schwellenwert-Abstand vor dem eindeutigen Sendungsstandortverfolgungssignal, das neben dem eindeutigen Gerätestandortsignal angeordnet ist; und (ii) Erfassen, dass ein zweites Fahrergerätsignal, das sich von dem eindeutigen Gerätestandortsignal unterscheidet, neben einem eindeutigen Sendungsstandortverfolgungssignal angeordnet ist und beginnt, sich übereinstimmend damit zu bewegen, wobei das zweite Fahrergerätsignal nicht mit dem vorgesehenen Fahrer oder einem zweiten Fahrer, dem der Transport der Sendung zugewiesen wurde, verbunden ist;
als Reaktion auf das Identifizieren der Anomalie, Auslösen einer Reihe von reaktiven Handlungen, die dazu dienen, einen nicht autorisierten Fahrer abzuhalten oder zu stoppen, eine Sendung zu übernehmen; und
als Reaktion auf ein empfangenes Signal, das anzeigt, dass der vorgesehene Fahrer die Sendung abgeholt hat, Verbinden und nebeneinander Anordnen des eindeutigen Gerätestandortsignals und des eindeutigen Sendungsstandortverfolgungssignals, um eine neue Sendungsgruppe zu erstellen und zu verfolgen.

12. Verfahren, das von einem Prozessor eines Datenverarbeitungssystems ausgeführt wird, umfassend:
Empfangen über ein Netzwerkschnittstellen-Gerät des Datenverarbeitungssystems, einer Vielzahl von Standortverfolgungssignalen, wobei jedes Standortverfolgungssignal einen Standort mehrerer sendungsbezogener Einheiten anzeigt, die gemeinsam als eine Sendungsgruppe verfolgt werden;
Verbinden der Sendungsgruppe der Standortverfolgungssignale und Zuweisen einer eindeutigen Sendungsverfolgungskennung (STID) an die Sendungsgruppe, um die Bewegung der Standortverfolgungssignale im Verhältnis zueinander zu verfolgen;
Darstellen der Sendungsgruppe als eine Vielzahl von nebeneinander angeordneten visuellen Affordanzen auf einem Anzeigegerät des Datenverarbeitungssystems, das eine Sendungsverfolgungs-Benutzeroberfläche (Ul) darstellt, wobei jedes empfangene Standortverfolgungssignal durch eine visuelle Affordanz aus der Vielzahl von nebeneinander angeordneten visuellen Affordanzen repräsentiert wird;
Darstellen, auf dem Anzeigegerät innerhalb der Sendungsverfolgungs-Ul, einer Bewegung der Vielzahl von Standortverfolgungssignalen, die mit der Sendungsgruppe verbunden sind;
Überwachen, durch Analysieren der Bewegung der Vielzahl von Standortverfolgungssignalen der Sendungsgruppe, um jede unplanmäßige Abweichung in mindestens einem eines erwarteten gemeinsamen Standorts und einer erwarteten Geolokalisierung von empfangenen Aktualisierungen der Standortverfolgungssignale innerhalb der Sendungsgruppe zu erfassen; und
als Reaktion auf das Erfassen einer unplanmäßigen Abweichung: Identifizieren eines spezifischen Typs der unplanmäßigen Abweichung; und Auslösen einer Reihe von reaktiven Handlungen, basierend auf dem spezifischen Typ der unplanmäßigen Abweichung, wobei die reaktiven Handlungen das Darstellen mindestens entweder einer akustischen oder einer optischen Warnmeldung umfassen.

13. Verfahren nach Anspruch 12, ferner umfassend:
Erzeugen und Anzeigen auf dem Anzeigegerät der Sendungsverfolgungsschnittstelle (UI), die entsprechende Standorte jeder einer Vielzahl von Sendungsgruppen anzeigt, die gleichzeitig verfolgt werden; und
Anzeigen, innerhalb der Sendungsverfolgungs-Ul, wenn eine Anomalie in einer der Vielzahl von Sendungsgruppen erfasst wurde.

14. Verfahren nach Anspruch 12, wobei das Darstellen der Sendungsgruppe als eine Vielzahl von nebeneinander angeordneten visuellen Affordanzen auf der Sendungsverfolgungs-Ul Folgendes umfasst:
Darstellen auf dem Anzeigegerät jedes Standortverfolgungssignals innerhalb der Sendungsgruppe als eine separate visuelle Affordanz, die neben anderen visuellen Affordanzen angeordnet ist, die einem zugehörigen Standortverfolgungssignal einer sendungsbezogenen Einheit innerhalb der Sendungsgruppe entspricht;
Nebeneinander Anordnen und Darstellen der visuellen Affordanzen, die jedes der empfangenen Standortverfolgungssignale mit einer räumlichen Ausrichtung empfangen, die einen Trennungsabstand der sendungsbezogenen Einheiten zeigen;
regelmäßiges Empfangen aktualisierter Standortverfolgungssignale von einer oder mehreren der sendungsbezogenen Einheiten;
Aktualisieren der Darstellung der Vielzahl von nebeneinander angeordneten visuellen Affordanzen auf der Ul, basierend auf den aktualisierten Standortverfolgungssignalen,
wobei die Vielzahl der nebeneinander angeordneten visuellen Affordanzen eine Vielzahl von nebeneinander angeordneten Punkten umfasst;
Bereitstellen eines geographischen Mapping der Vielzahl von nebeneinander angeordneten Punkten auf der Ul;
Vergleichen eines aktuellen Standorts der nebeneinander angeordneten Punkte mit mindestens entweder einem vorgesehenen Bestimmungsort einer Sendungslieferung oder einem aktuellen erwarteten Standort der Sendung;
Identifizieren, basierend auf dem aktuellen Standort, ob eine Streckenabweichung durch einen Fahrer aufgetreten ist, die außerhalb eines zulässigen Abweichungsbereichs von einer vorbestimmten Strecke liegt; und
Erzeugen und Übermitteln mindestens eines Benachrichtigungssignals an ein zweites Gerät, um die Abweichung zu korrigieren.

15. Verfahren nach Anspruch 12, wobei:
Die Vielzahl von nebeneinander angeordneten Affordanzen eine Vielzahl von nebeneinander angeordneten Punkten umfasst, jeder Punkt stellt dabei einen Standort einer sendungsbezogenen Einheit dar, der aus einem entsprechenden der empfangenen Standortverfolgungssignale bestimmt wird; und
das Verfahren ferner umfassend:
Erfassen eines Auftretens einer Anomalie aus einer Gruppe umfassend (i) einen Verlust des Empfangs der Standortverfolgungssignale von einer oder mehreren der sendungsbezogenen Einheiten,
(ii) unplanmäßige Änderungen in einer räumlichen Beziehung der sendungsbezogenen Einheiten oder entsprechender visueller Affordanzen auf der Sendungsverfolgungs-Ul,
und (iii) einer unplanmäßigen Bewegung eines Sendungsverfolgungssignals von einem Sendungsabholungsstandort bevor es neben einem Fahrerstandortverfolgungssignal angeordnet und gruppiert wurde, was eine nicht autorisierte Übernahme einer Sendung anzeigt; und
als Reaktion auf ein Erfassen einer Anomalie, die eine unplanmäßige Trennung der nebeneinander angeordneten Punkte voneinander vor einer Sendungslieferung an den vorgesehenen Bestimmungsort einschließt:
Bestimmen, ob es einen stichhaltigen Grund für die unplanmäßige Trennung gibt, indem der historische Datenverlauf und die zu den sendungsbezogenen Einheiten empfangenen Daten, die Strecke, der geographische Standort, an dem die unplanmäßige Trennung auftritt und empfangene Umweltbedingungen bewertet werden; und
als Reaktion auf ein Nichtidentifizieren eines stichhaltigen Grundes für die unplanmäßige Trennung: Markieren der Sendung für eine erweiterte Überwachung; Auslösen von Sicherheitsmaßnahmen, um relevante Parteien auf das Auftreten der unplanmäßigen Trennung der nebeneinander angeordneten Punkte hinzuweisen; und Erstellen und Speichern einer Aufzeichnung des Auftretens der Anomalie.

## Revendications

1. Système de traitement de données comprenant :
une mémoire dans laquelle est mémorisé un utilitaire de suivi et de sécurité de localisation d'expédition (SLTSU) ;
un dispositif d'affichage qui présente visuellement au moins une interface utilisateur (UI) graphique générée par la SLTSU ;
au moins un dispositif d'interface réseau (NID) permettant au système de traitement de données de recevoir et de transmettre des informations par l'intermédiaire d'un ou plusieurs réseaux de communication ;
au moins un processeur couplé à la mémoire, le dispositif d'affichage et ledit au moins un NID et qui exécute la SLTSU pour configurer le système de traitement de données pour :
recevoir, par l'intermédiaire dudit au moins un NID, une pluralité de signaux de suivi de localisation indiquant la localisation de plusieurs entités associées à l'expédition qui sont suivies simultanément comme un groupe d'expédition ;
associer les signaux de suivi de localisation comme le groupe d'expédition et affecter un identificateur de suivi d'expédition unique (STID) au groupe d'expédition pour suivre le mouvement des signaux de suivi de localisation les uns aux autres ;
présenter, sur le dispositif d'affichage, le groupe d'expédition comme une pluralité d'affordances visuelles colocalisées sur une interface utilisateur (UI) de suivi d'expédition, dans lequel chaque signal de suivi de localisation reçu est représenté par une affordance visuelle parmi la pluralité d'affordances visuelles colocalisées ;
présenter, sur le dispositif d'affichage à l'intérieur de l'UI de suivi d'expédition, le mouvement de la pluralité de signaux de suivi de localisation associés au groupe d'expédition ;
surveiller, en analysant le mouvement de la pluralité de signaux de suivi de localisation du groupe d'expédition, pour détecter toute variation non planifiée dans au moins une parmi une colocalisation attendue et une géolocalisation attendue des mises à jour reçues des signaux de suivi de localisation à l'intérieur du groupe d'expédition ; et
en réponse à la détection d'une variation non planifiée : identifier un type spécifique de variation non planifiée ; et déclencher une série d'actions de réponse basées sur le type spécifique de la variation non planifiée, les actions de réponse comprenant la présentation d'au moins une notification d'alerte audible et d'une notification d'alerte visible.

2. Système de traitement de données selon la revendication 1, dans lequel la SLTSU permet en outre au système de traitement de données de :
générer et afficher, sur le dispositif d'affichage, l'interface utilisateur (UI) de suivi d'expédition affichant chaque groupe d'une pluralité de groupes d'expédition étant suivis simultanément ; et
indiquer, à l'intérieur de l'UI de suivi d'expédition, lorsqu'une anomalie a été détectée dans un groupe de la pluralité de groupes d'expédition.

3. Système de traitement de données selon la revendication 1, dans lequel la présentation du groupe d'expédition comme une pluralité d'affordances visuelles colocalisées sur l'UI de suivi d'expédition comprend la configuration supplémentaire par la SLTSU du système de traitement de données pour :
présenter chaque signal de suivi de localisation à l'intérieur du groupe d'expédition comme une affordance visuelle séparée colocalisée avec d'autres affordances visuelles correspondant à un signal de suivi de localisation respectif d'une entité associée à l'expédition à l'intérieur du groupe d'expédition ;
colocaliser et présenter les affordances visuelles représentant chacun des signaux de suivi de localisation reçus avec un alignement spatial indiquant une distance de séparation relative des entités associées à l'expédition ;
recevoir de manière périodique des signaux de suivi de localisation mis à jour en provenance d'une ou plusieurs parmi les entités associées à l'expédition ;
mettre à jour la présentation de la pluralité d'affordances visuelles colocalisées sur l'UI basées sur les signaux de suivi de localisation mis à jour.

4. Système de traitement de données selon la revendication 3, dans lequel la SLTSU configure le système de traitement de données pour présenter visuellement chaque entité associée à l'expédition à l'intérieur d'un groupe d'expédition comme des points visuellement distincts sur l'UI de suivi d'expédition, à l'aide d'une ou plusieurs parmi (i) un type de point différent et (ii) différentes caractéristiques affectées à un même type de point.

5. Système de traitement de données selon la revendication 1, dans lequel la SLTSU configure le système de traitement de données pour effectuer les fonctions permettant :
en réponse à la détection d'une sélection de la STID unique ou de l'affordance visuelle d'un groupe d'expédition spécifique étant affiché à l'intérieur de l'UI de suivi d'expédition, de générer et d'afficher, sur le dispositif d'affichage, une seconde UI de suivi d'expédition qui fournit des informations détaillées sur une expédition correspondante et une dernière localisation enregistrée de chaque entité associée à l'expédition du groupe d'expédition par rapport à une localisation de chaque autre entité associée à l'expédition à l'intérieur du groupe d'expédition et en relation à une coordonnée géographique ou de localisation des entités associées à l'expédition et à l'itinéraire d'expédition.

6. Système de traitement de données selon la revendication 1, dans lequel :
la pluralité d'affordances visuelles colocalisées comprend une pluralité de points colocalisés, chaque point représentant une localisation d'une entité associée à l'expédition comme déterminée à partir d'un signal respectif parmi les signaux de suivi de localisation reçus ; et
dans lequel, pour surveiller toute variation non planifiée, la STLSU configure le système de traitement de données de manière à :
détecter l'occurrence d'une anomalie parmi un groupe comprenant (i) la perte de réception des signaux de suivi de localisation en provenance d'une ou plusieurs parmi les entités associées à l'expédition, (ii) les changements non planifiés dans une relation spatiale entre les entités associées à l'expédition ou les affordances visuelles correspondantes sur l'UI de suivi d'expédition, et (iii) un mouvement non planifié d'un signal de suivi de localisation d'expédition en provenance d'une localisation de collecte de l'expédition avant d'être colocalisé et groupé avec un signal de suivi de localisation d'opérateur, indiquant une prise d'expédition non autorisée ; et
en réponse à la détection d'une anomalie qui comprend une séparation non planifiée des points colocalisés les uns des autres avant la livraison d'une expédition à une destination prévue :
déterminer s'il existe une raison valable pour la séparation non planifiée en évaluant les données historiques et les données reçues sur les entités associées à l'expédition, l'itinéraire, la localisation géographique où la séparation non planifiée survient et les conditions environnementales reçues ; et
en réponse à la non-identification d'une raison valable pour la séparation non planifiée : signaler l'expédition pour une surveillance renforcée ; déclencher des mesures de sécurité pour alerter les parties concernées de l'occurrence de la séparation non planifiée des points colocalisés ; et créer et mémoriser un enregistrement de l'occurrence de l'anomalie.

7. Système de traitement de données selon la revendication 6, dans lequel la STLSU configure le système de traitement de données pour :
en réponse à la variation étant une séparation des entités associées à l'expédition les unes des autres à un moment non planifié avant que l'expédition n'atteigne une destination de livraison de l'expédition ;
évaluer, à l'aide de données historiques et de données cartographiques géographiques, la localisation géographique où la séparation survient ;
placer l'expédition dans un état de veille/surveillance renforcée ;
déclencher l'exécution d'un ou plusieurs dispositifs de sûreté qui informent au moins un opérateur et un expéditeur de la séparation ; et
créer et mémoriser un enregistrement de l'événement de séparation et des actions de réponse prises ;
et en réponse à la séparation survenant à la destination de livraison de l'expédition :
découpler les signaux de suivi de localisation à l'intérieur du groupe d'expédition ;
mettre à jour un système de suivi d'expédition pour indiquer que l'expédition a été livrée ; et
mettre à jour l'UI de suivi d'expédition pour supprimer la pluralité d'affordances visuelles colocalisées destinées à suivre le groupe d'expédition.

8. Système de traitement de données selon la revendication 7, dans lequel la STLSU configure le système de traitement de données pour :
vérifier si oui ou non un signal de désescalade est reçu en provenance d'une partie de confiance fournissant une vérification d'une sécurité de l'expédition avant l'expiration d'une fenêtre temporelle préétablie ;
en réponse à la réception du signal de désescalade avant l'expiration de la fenêtre temporelle préétablie, supprimer l'expédition de l'état de veille/surveillance renforcée ; et
en réponse à (i) tous les points disparaissent simultanément pendant plus longtemps que la fenêtre temporelle préétablie et (ii) ne recevant pas le signal de désescalade avant l'expiration de la fenêtre temporelle préétablie lorsque seul un sous-ensemble des signaux de suivi de localisation disparaît de l'UI de suivi d'expédition :
placer l'expédition dans un état de danger élevé ; et
déclencher une alarme de niveau supérieur pour lancer une série d'opérations et d'actions de réponse.

9. Système de traitement de données selon la revendication 6, dans lequel la variation non planifiée comprend une perte d'un signal de suivi de localisation d'au moins une entité d'expédition associée au groupe d'expédition, et la STLSU configure le système de traitement de données pour :
détecter la perte complète d'au moins un signal de suivi de localisation en provenance d'une ou plusieurs parmi les entités associées à l'expédition ;
en réponse à la perte complète détectée, modifier une présentation à l'intérieur de l'UI de suivi d'expédition de l'affordance visuelle correspondant au suivi de localisation pour cette entité associée à l'expédition ;
déterminer, en partie sur la base des caractéristiques associées à la perte dudit au moins un signal, si oui ou non la perte résulte d'une attaque de brouillage à la localisation de l'expédition ;
en réponse à la détermination que la perte résultante est le résultat d'une attaque de brouillage :
générer et émettre une notification spécifique qui identifie la détection de l'attaque de brouillage ; et
lancer une ou plusieurs actions pour contrer l'attaque de brouillage et protéger une ou plusieurs parmi les entités associées à l'expédition contre les mauvais actes ; et
en réponse à la perte de signal étant une perte partielle des signaux de suivi de localisation reçus affectant seulement un sous-ensemble des entités associées à l'expédition à l'intérieur du groupe d'expédition :
déclencher un événement d'alarme de niveau bas ;
régler une minuterie pour une fenêtre temporelle préétablie afin de suivre la durée qui s'écoule après la détection de la perte partielle de signal ;
surveiller si oui ou non la perte partielle du signal de suivi de localisation reçu est résolue avant l'expiration de la fenêtre temporelle préétablie ;
en réponse à la perte partielle étant résolue à l'intérieur de la fenêtre temporelle préétablie, enregistrer l'événement, y compris la localisation géographique de l'entité associée à l'expédition au moment où la perte partielle est survenue ; et
en réponse à la perte partielle n'étant pas résolue à l'intérieur de la fenêtre temporelle préétablie, générer des alertes et des notifications en temps réel d'un problème détecté avec un mécanisme de suivi de localisation correspondant qui peut indiquer une altération et un vol potentiel d'une entité associée à l'expédition.

10. Système de traitement de données selon la revendication 1, dans lequel pour effectuer la série d'actions de réponse basées sur le type spécifique de variation identifiée, la SLTSU configure le système de traitement de données pour effectuer en outre au moins une action parmi :
la mise en évidence, sur l'UI de suivi d'expédition, d'une affordance visuelle correspondante de l'ID unique du groupe d'expéditions pour lequel la variation est détectée :
l'émission d'au moins une notification visuelle à l'écran et d'une notification sonore pour alerter le personnel de surveillance de la variation détectée ; et
la communication de la notification à un dispositif de communication distant d'au moins un opérateur ou un expéditeur associé à l'expédition pour fournir une notification en temps réel de la variation.

11. Système de traitement de données selon la revendication 1, dans lequel la SLTSU configure le système de traitement de données pour :
identifier un opérateur prévu et un navire de transport affecté à une expédition future en attente de ramassage par l'opérateur prévu, l'opérateur prévu présentant un ID d'opérateur et un dispositif de communication qui fournit un signal unique de localisation du dispositif associé à l'ID d'opérateur, l'expédition présentant également un signal unique du suivi de localisation de l'expédition ;
associer l'ID de l'opérateur à l'expédition future ;
surveiller la localisation géographique de la future expédition avant sa collecte par l'opérateur prévu ;
identifier une anomalie parmi : (i) la détection d'un changement dans la localisation géographique de l'expédition future de plus d'une première distance de seuil avant que le signal unique du suivi de localisation de l'expédition étant colocalisé avec le signal unique de localisation du dispositif; et (ii) la détection qu'un second signal du dispositif de l'opérateur, différent du signal unique de localisation du dispositif, est colocalisé avec le signal unique du suivi de localisation de l'expédition et commence à se déplacer à l'unisson avec celui-ci, lorsque le second signal de dispositif opérateur n'est pas associé à l'opérateur prévu ou à un second opérateur qui a été affecté au transport de l'expédition ;
en réponse à l'identification de l'anomalie, déclencher une série d'actions de réponse conçues pour empêcher ou arrêter un opérateur non autorisé de prendre l'expédition ; et
en réponse à un signal reçu indiquant que l'opérateur prévu a collecté l'expédition, lier et colocaliser le signal unique de localisation du dispositif et le signal unique du suivi de localisation d'expédition pour créer et suivre un nouveau groupe d'expédition.

12. Procédé mis en œuvre par un processeur d'un système de traitement de données comprenant :
la réception, par l'intermédiaire d'un dispositif d'interface réseau du système de traitement de données, d'une pluralité de signaux de suivi de localisation, chaque signal de suivi de localisation indiquant une localisation de multiples entités associées à l'expédition qui sont suivies simultanément en tant que groupe d'expédition ;
l'association des signaux de suivi de localisation comme le groupe d'expédition et l'affectation d'un identificateur de suivi d'expédition unique (STID) au groupe d'expédition pour suivre le mouvement des signaux de suivi de localisation les uns aux autres ;
la présentation du groupe d'expédition comme une pluralité d'affordances visuelles colocalisées sur un dispositif d'affichage de l'affichage du système de traitement de données présentant un interface utilisateur (UI) de suivi d'expédition, dans lequel chaque signal de suivi de localisation reçu est représenté par une affordance visuelle parmi la pluralité d'affordances visuelles colocalisées ;
la présentation, sur le dispositif d'affichage à l'intérieur de l'UI de suivi d'expédition, du mouvement de la pluralité de signaux de suivi de localisation associés au groupe d'expédition ;
la surveillance, en analysant le mouvement de la pluralité de signaux de suivi de localisation du groupe d'expédition, pour détecter toute variation non planifiée dans au moins une parmi une colocalisation attendue et une géolocalisation attendue des mises à jour reçues des signaux suivi de localisation à l'intérieur du groupe d'expédition ; et
en réponse à la détection d'une variation non planifiée : l'identification d'un type spécifique de variation non planifiée ; et le déclenchement d'une série d'actions de réponse basées sur le type spécifique de la variation non planifiée, les actions de réponse comprenant la présentation d'au moins une notification d'alerte audible et d'une notification d'alerte visible.

13. Procédé selon la revendication 12, comprenant en outre :
la génération et l'affichage, sur le dispositif d'affichage, de l'interface utilisateur (UI) de suivi d'expédition qui affiche les localisations respectives de chaque groupe d'une pluralité de groupes d'expédition étant suivis simultanément ; et
l'indication, à l'intérieur de l'UI de suivi d'expédition sur le dispositif d'affichage, lorsqu'une anomalie a été détectée dans un groupe de la pluralité de groupes d'expédition.

14. Procédé selon la revendication 12, dans lequel la présentation du groupe d'expédition comme une pluralité d'affordances visuelles colocalisées sur l'UI de suivi d'expédition comprend :
la présentation, sur le dispositif d'affichage, de chaque signal de suivi de localisation à l'intérieur du groupe d'expédition comme une affordance visuelle séparée colocalisée avec d'autres affordances visuelles correspondant chacune à un suivi de localisation d'une entité associée à l'expédition à l'intérieur du groupe d'expédition ;
la colocalisation et la présentation des affordances visuelles représentant chacun des signaux de suivi de localisation reçus avec un alignement spatial indiquant une distance de séparation des entités associées à l'expédition ;
la réception de manière périodique des signaux de suivi de localisation mis à jour en provenance d'une ou plusieurs parmi les entités associées à l'expédition ;
la mise à jour de la présentation de la pluralité d'affordances visuelles colocalisées sur l'UI basées sur les signaux de suivi de localisation mis à jour,
dans lequel la pluralité d'affordances visuelles colocalisées comprend une pluralité de points colocalisés ;
la fourniture d'une cartographie géographique de la pluralité de points colocalisés sur l'Ul ;
la comparaison d'un emplacement actuel des points colocalisés à au moins une parmi une destination prévue de livraison de l'expédition et une localisation attendue de l'expédition ;
l'identification, basée sur la localisation actuelle, s'il y a eu une variation d'itinéraire par un opérateur qui se situe à l'extérieur d'une fourchette acceptable de variation par rapport à un itinéraire préplanifié ; et
la génération et la transmission d'au moins un signal de notification à un second dispositif pour corriger la variation.

15. Procédé selon la revendication 12, dans lequel :
la pluralité d'affordances visuelles colocalisées comprend une pluralité de points colocalisés, chaque point représentant une localisation d'une entité associée à l'expédition comme déterminée à partir d'un signal respectif parmi les signaux de suivi de localisation reçus ; et
le procédé comprend en outre :
la détection d'une occurrence d'une anomalie parmi un groupe comprenant i) la perte de réception des signaux de suivi de localisation en provenance d'une ou plusieurs parmi les entités associées à l'expédition,
ii) des changements non planifiés dans une relation spatiale entre les entités associées à l'expédition ou les affordances visuelles correspondantes sur l'UI de suivi d'expédition,
et (iii) un mouvement non planifié d'un signal de suivi de localisation d'expédition en provenance d'une localisation de collecte de l'expédition avant d'être colocalisé et groupé avec un signal de suivi de localisation d'opérateur, indiquant une prise d'expédition non autorisée ; et
en réponse à la détection d'une anomalie qui comprend une séparation non planifiée des points colocalisés les uns des autres avant la livraison d'une expédition à la destination prévue :
la détermination s'il existe une raison valable pour la séparation non planifiée en évaluant les données historiques et les données reçues concernant les entités associées à l'expédition, l'itinéraire, la localisation géographique à laquelle la séparation non planifiée survient et les conditions environnementales reçues ; et,
en réponse à l'absence d'identification d'une raison valable pour la séparation non planifiée : le signalement de l'expédition pour une surveillance renforcée ; le déclenchement des mesures de sécurité pour alerter de manière audible ou visible les parties concernées de l'occurrence de l'anomalie ; et la création et la mémorisation d'un enregistrement de l'occurrence de l'anomalie.
